# EUROPEAN PATENT SPECIFICATION

(11) **EP 4 020 964 B1**
(45) Date of publication and mention of the grant of the patent: **22.10.2025**
(21) Application number: 20855950.0
(22) Date of filing: 17.08.2020
(51) Int. Cl.: H04N 23/57, H04N 23/60, H04N 23/611, H04N 23/667

(54) **CAMERA CONTROL METHOD AND APPARATUS, AND TERMINAL DEVICE**
KAMERASTEUERUNGSVERFAHREN UND -VORRICHTUNG SOWIE ENDGERÄT
PROCÉDÉ ET APPAREIL DE COMMANDE DE CAMÉRA, ET DISPOSITIF TERMINAL

(30) Priority: 30.08.2019 CN 201910818478
(43) Date of publication of application: 29.06.2022
(73) Proprietor: Huawei Technologies Co., Ltd., Longgang District Shenzhen, Guangdong 518129 (CN)
(72) Inventor: LIU, Hang, Shenzhen, Guangdong 518129 (CN); CHEN, Xiaohan, Shenzhen, Guangdong 518129 (CN)
(74) Representative: Gill Jennings & Every LLP
(86) International application number: PCT/CN2020/109471
(87) International publication number: WO 2021/036839

(56) References cited:
- WO-A1-2008/049151
- CN-A- 108 134 900
- CN-A- 108 961 859
- CN-A- 109 432 753
- CN-A- 110 100 249
- US-A1- 2017 237 884
- US-A1- 2017 280 109
- US-A1- 2017 318 201
- US-A1- 2017 348 562
- US-B1- 7 328 119

## Description

### TECHNICAL FIELD

This application relates to the electronic field, and more specifically, to a camera control method and apparatus and a terminal device in the electronic field.

### BACKGROUND

Intelligent fitness is an exercise mode in which sports and health data of a user are consolidated by using intelligent hardware, an intelligent fitness application (application, APP), a personal intelligent apparatus, an intelligent system management platform, and the like, to provide the user with professional, systematic, and personalized sports and health guidance based on a cloud computing center. Usually, a data collection apparatus may be used to obtain sports and health data of the user. The data collection apparatus may be installed on fitness equipment, may be worn on the body of the user, or may be disposed on a terminal device that interacts with an exerciser.

The data collection apparatus may include at least one camera, configured to collect an exercise image or video of the exerciser. WO 2008/049151 A1 discloses a method and apparatus which uses sensed data coordinates of a human movement to provide a basis for producing a personalized audio-visual teach presentation or aid. US 2017/0318201 A1 discloses methods and systems that maximize a display area associated with a mobile device by varying camera placement on the mobile device.

The cloud computing center may provide guidance on an exercise movement of the exerciser in real time based on the exercise image or video of the exerciser, thereby improving training efficiency. However, a camera of an electronic device is usually disposed fixedly on a main body of the device. In an exercise process, a user cannot sense whether the camera is started. Consequently, privacy of the user cannot be effectively protected.

Therefore, a solution that can enable a user to sense whether a camera is started needs to be provided, to effectively protect privacy of the user.

### SUMMARY

This application provides a camera control method and apparatus and a terminal device, so as to enable a user to sense whether a camera is started, thereby effectively protecting privacy of the user.

According to a first aspect, a camera control method is provided. A camera is disposed in a terminal device. In the method, the terminal device obtains a first instruction input by a user. The first instruction is used to play a movement tutorial in a first application in the terminal device. The terminal device may control, in response to the first instruction, the camera in the terminal device to start and pop up from the terminal device and to obtain an image including a user movement after the camera pops up from the terminal device. The user movement is a movement made by the user by imitating the movement tutorial in the first application in the terminal device.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

In some possible implementations, the camera may be referred to as a pop-up camera or a hidden camera. The camera is hidden in the terminal device when the camera is in a closed state. In this case, the user cannot see the camera on the terminal device. The camera pops up from the terminal device when the camera is in a started state. In this case, the user can observe the camera.

Herein, that the camera pops up from the terminal device may be a process in which the camera changes from a state of being hidden in the terminal device to a state in which the camera can be observed by the user. Specifically, the camera may slide, rotate, or eject out from the terminal device. This is not limited in this embodiment of this application.

In addition, that the camera retracts back to the terminal device may be a process in which the camera changes from a state in which the camera can be observed by the user to a state of being hidden in the terminal device. Specifically, the camera may slide, rotate, or eject into the terminal device. This is not limited in this embodiment of this application.

With reference to the first aspect, in some implementations of the first aspect, when playing of the movement tutorial is paused, ended, or quitted, the terminal device determines to stop obtaining an image including a user movement. When determining to stop obtaining an image including a user movement, the terminal device controls the camera to close and retract back to the terminal device.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

In this embodiment of this application, the image that includes the user movement and that is obtained by the camera may include a video including the user movement. This is not limited in this embodiment of this application.

In some possible implementations, when the camera pops up from the terminal device, an indicator may be further controlled to turn on. The indicator being turned on represents that the camera is in a started state. When the camera is hidden in the terminal device, the indicator is in an off state. Therefore, in this embodiment of this application, turning on the indicator when the camera pops up can further enable the user to sense whether the camera is in use at a current moment, thereby protecting privacy of the user and improving user experience.

With reference to the first aspect, in some implementations of the first aspect, the terminal device further includes a display. The display may be configured to play the movement tutorial in the first application and the image or video that includes the user movement and that is obtained by the camera. In this way, the user can directly observe the movement tutorial and the movement made by the user. This helps the user learn, through comparison, whether the movement made by the user is standard, thereby helping improve user experience.

In some possible implementations, the terminal device may obtain, by using the display, the first instruction input by the user. For example, the display may obtain, by using a sensor, an instruction that is input to the display by the user by using a remote control. Alternatively, the display may be a touchscreen. An instruction input by the user may be obtained by using the touchscreen and a sensor. This embodiment of this application is not limited thereto.

With reference to the first aspect, in some implementations of the first aspect, the terminal device prompts the user whether it is necessary to monitor a movement of the user. The terminal device obtains a second instruction input by the user. The second instruction is used to indicate that the user permits the terminal device to obtain an image including a user movement. Then, the terminal device may control the camera to start and pop up, to obtain the image including the user movement.

For example, the terminal device may prompt, by using the display, the user whether it is necessary to monitor a movement of the user; and then obtain, by using the display, the second instruction input by the user. Specifically, for a manner of obtaining the second instruction, refer to a manner of obtaining the first instruction.

Therefore, in this embodiment of this application, the terminal device can monitor a movement of the user in real time when the user permits the terminal device to obtain an image including a user movement, and does not monitor a movement of the user when the user does not permit the terminal device to obtain a user movement. In this way, the user can autonomously choose whether to start the camera, thereby further protecting privacy of the user and improving user experience.

With reference to the first aspect, in some implementations of the first aspect, before the terminal device obtains the first instruction input by the user, the terminal device may further obtain a third instruction input by the user. The third instruction is used to access the first application. The terminal device controls, in response to the third instruction, the camera to start and pop up from the terminal device and to obtain an image including facial information of the user after the camera pops up from the terminal device. Then, the terminal device accesses an account of the user based on the image including the facial information of the user. The account of the user stores the facial information of the user.

For example, the terminal device may obtain, by using the display, the third instruction input by the user. Specifically, for a manner of obtaining the third instruction, refer to a manner of obtaining the first instruction.

Therefore, in this embodiment of this application, the pop-up camera is controlled to pop up from the terminal device when the terminal device is collecting the facial information of the user, and the pop-up camera is controlled to hide in the terminal device when the terminal device is not collecting the facial information of the user. In this way, the user can clearly sense whether the camera is in use at a current moment based on whether the pop-up camera is popped up, thereby protecting privacy of the user and improving user experience.

With reference to the first aspect, in some implementations of the first aspect, before the terminal device accesses the account of the user based on the image including the facial information of the user, the terminal device may further create the account of the user based on the image including the facial information of the user.

With reference to the first aspect, in some implementations of the first aspect, after the image including the facial information of the user is obtained, the terminal device may further control the camera to close and retract back to the terminal device.

Therefore, in this embodiment of this application, the pop-up camera is controlled to pop up from the terminal device when the terminal device is collecting the facial information of the user, and the pop-up camera is controlled to hide in the terminal device when the terminal device is not collecting the facial information of the user. In this way, the user can clearly sense whether the camera is in use at a current moment based on whether the pop-up camera is popped up, thereby protecting privacy of the user and improving user experience.

With reference to the first aspect, in some implementations of the first aspect, in a process in which the terminal device controls the camera to start and pop up from the terminal device, first audio may be played, where the first audio is used to indicate that the terminal device is starting the camera.

In this embodiment of this application, the terminal device plays a voice prompt in the process in which the camera pops up from the terminal device. In this way, even in darkness, the user can still sense that the camera is popping up, thereby improving user experience.

In some possible implementations, the pop-up camera may be controlled to start while popping up. This can shorten a time interval from when the camera pops up from the terminal device to when photographing begins, thereby shortening a wait time for the user and improving user experience.

With reference to the first aspect, in some implementations of the first aspect, in a process in which the terminal device controls the camera to close and retract back to the terminal device, second audio may be further played, where the second audio is used to indicate that the terminal device is closing the camera.

In this embodiment of this application, the terminal device plays a voice prompt in the process in which the camera retracts back to the terminal device. In this way, even in darkness, the user can still sense that the camera is retracting back, thereby improving user experience.

In some possible implementations, the pop-up camera may be controlled to close while retracting back. This can shorten a time for the camera to retract back to the terminal device, thereby improving user experience.

According to a second aspect, a camera control apparatus is provided. A camera is disposed in a terminal device, and the apparatus includes:
a processor, configured to obtain a first instruction input by a user, where the first instruction is used to play a movement tutorial in a first application in the terminal device. The processor is further configured to control, in response to the first instruction, the camera to start and pop up from the terminal device and to obtain an image including a user movement after the camera pops up from the terminal device, where the user movement is a movement made by the user by imitating the movement tutorial in the first application.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

In some possible implementations, the camera may be referred to as a pop-up camera or a hidden camera. The camera is hidden in the terminal device when the camera is in a closed state. In this case, the user cannot see the camera on the terminal device. The camera pops up from the terminal device when the camera is in a started state. In this case, the user can observe the camera.

Herein, that the camera pops up from the terminal device may be a process in which the camera changes from a state of being hidden in the terminal device to a state in which the camera can be observed by the user. Specifically, the camera may slide, rotate, or eject out from the terminal device. This is not limited in this embodiment of this application.

In addition, that the camera retracts back to the terminal device may be a process in which the camera changes from a state in which the camera can be observed by the user to a state of being hidden in the terminal device. Specifically, the camera may slide, rotate, or eject into the terminal device. This is not limited in this embodiment of this application.

With reference to the second aspect, in some implementations of the second aspect, the terminal device may further include a display. The processor is further configured to play, by using the display, the movement tutorial in the first application and the image or a video that includes the user movement and that is obtained by the camera. In this way, the user can directly observe the movement tutorial and the movement made by the user. This helps the user learn, through comparison, whether the movement made by the user is standard, thereby helping improve user experience.

In some possible implementations, the processor may obtain, by using the display, the first instruction input by the user. For example, when the terminal device is a smart TV, the processor may obtain, by using the display, an instruction input to the display by the user by using a remote control. Alternatively, the display may be a touchscreen. The processor may obtain, by using the touchscreen, an instruction input by the user. This embodiment of this application is not limited thereto.

With reference to the second aspect, in some implementations of the second aspect, the processor is further configured to: when playing of the movement tutorial is paused, ended, or quitted, determine to stop obtaining an image including a user movement. When determining to stop obtaining an image including a user movement, the processor is configured to control the camera to close and retract back to the terminal device.

In some possible implementations, the terminal device may further include an indicator. When the camera pops up from the terminal device, the indicator may be further controlled to turn on. The indicator being turned on represents that the camera is in a started state. When the camera is hidden in the terminal device, the indicator is in an off state. Therefore, in this embodiment of this application, turning on the indicator when the camera pops up can further enable the user to sense whether the camera is in use at a current moment, thereby protecting privacy of the user and improving user experience.

With reference to the second aspect, in some implementations of the second aspect, the display is further configured to prompt the user whether it is necessary to monitor a movement of the user. The processor is further configured to obtain a second instruction input by the user. The second instruction is used to indicate that the user permits the processor to obtain an image including a user movement.

For example, the processor may control the display to display a picture that is used to prompt the user whether it is necessary to monitor a movement of the user. Then, the processor obtains, by using the display, the second instruction input by the user.

With reference to the second aspect, in some implementations of the second aspect, the display is further configured to obtain a third instruction input by the user. The third instruction is used to access the first application.

The processor is further configured to control, in response to the third instruction, the camera to start and pop up from the terminal device and to obtain an image including facial information of the user after the camera pops up from the terminal device; and then access an account of the user based on the image including the facial information of the user, where the account of the user stores the facial information of the user.

For example, the processor may obtain, by using the display, the third instruction input by the user.

Therefore, in this embodiment of this application, the terminal device can monitor a movement of the user in real time when the user permits the terminal device to obtain an image including a user movement, and does not monitor a movement of the user when the user does not permit the terminal device to obtain a user movement. In this way, the user can autonomously choose whether to start the camera, thereby further protecting privacy of the user and improving user experience.

With reference to the second aspect, in some implementations of the second aspect, the processor is further configured to:
create the account of the user based on the image including the facial information of the user.

With reference to the second aspect, in some implementations of the second aspect, the processor is further configured to:
after the image including the facial information of the user is obtained, control the camera to close and retract back to the terminal device.

With reference to the second aspect, in some implementations of the second aspect, the terminal device further includes an audio player. The processor is further configured to: in a process of controlling the camera to start and pop up from the terminal device, control the audio player to play first audio, where the first audio is used to indicate that the terminal device is starting the camera.

Therefore, in this embodiment of this application, the terminal device plays a voice prompt in the process in which the camera pops up from the terminal device. In this way, even in darkness, the user can still sense that the camera is popping up, thereby improving user experience.

With reference to the second aspect, in some implementations of the second aspect, the terminal device further includes an audio player. The processor is further configured to: in a process of controlling the camera to close and retract back to the terminal device, control the audio player to play second audio, where the second audio is used to indicate that the terminal device is closing the camera.

Therefore, in this embodiment of this application, the terminal device plays a voice prompt in the process in which the camera retracts back to the terminal device. In this way, even in darkness, the user can still sense that the camera is retracting back, thereby improving user experience.

According to a third aspect, a camera control apparatus is further provided. A camera is disposed in a terminal device, and the apparatus includes an obtaining unit and a control unit.

The obtaining unit is configured to obtain a first instruction input by a user, where the first instruction is used to play a movement tutorial in a first application in the terminal device.

The control unit is configured to control, in response to the first instruction, the camera to start and pop up from the terminal device and to obtain an image including a user movement after the camera pops up from the terminal device, where the user movement is a movement made by the user by imitating the movement tutorial.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

With reference to the third aspect, in some implementations of the third aspect, the control unit is further configured to: when playing of the movement tutorial is paused, ended, or quitted, determine to stop obtaining an image including a user movement. When determining to stop obtaining an image including a user movement, the control unit is further configured to control the camera to close and retract back to the terminal device.

With reference to the third aspect, in some implementations of the third aspect, the terminal device further includes a display. The control unit is further configured to play, by using the display, the movement tutorial in the first application and the image that includes the user movement and that is obtained by the camera.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

With reference to the third aspect, in some implementations of the third aspect, the display is further configured to prompt the user whether it is necessary to monitor a movement of the user. The obtaining unit is further configured to obtain a second instruction input by the user. The second instruction is used to indicate that the user permits the terminal device to obtain an image including a user movement.

Therefore, in this embodiment of this application, the terminal device can monitor a movement of the user in real time when the user permits the terminal device to obtain an image including a user movement, and does not monitor a movement of the user when the user does not permit the terminal device to obtain a user movement. In this way, the user can autonomously choose whether to start the camera, thereby further protecting privacy of the user and improving user experience.

With reference to the third aspect, in some implementations of the third aspect, the obtaining unit is further configured to obtain a third instruction input by the user. The third instruction is used to access the first application. The control unit is further configured to control, in response to the third instruction, the camera to start and pop up from the terminal device and to obtain an image including facial information of the user after the camera pops up from the terminal device; and then access an account of the user based on the image including the facial information of the user, where the account of the user stores the facial information of the user.

With reference to the third aspect, in some implementations of the third aspect, the apparatus further includes a creation unit, configured to create the account of the user based on the image including the facial information of the user.

With reference to the third aspect, in some implementations of the third aspect, the control unit is further configured to: after the image including the facial information of the user is obtained, control the camera to close and retract back to the terminal device.

Therefore, in this embodiment of this application, the pop-up camera is controlled to pop up from the terminal device when the terminal device is collecting the facial information of the user, and the pop-up camera is controlled to hide in the terminal device when the terminal device is not collecting the facial information of the user. In this way, the user can clearly sense whether the camera is in use at a current moment based on whether the pop-up camera is popped up, thereby protecting privacy of the user and improving user experience.

With reference to the third aspect, in some implementations of the third aspect, the terminal device further includes an audio player. The control unit is further configured to: in a process of controlling the camera to start and pop up from the terminal device, control the audio player to play first audio, where the first audio is used to indicate that the terminal device is starting the camera.

In this embodiment of this application, the terminal device plays a voice prompt in the process in which the camera pops up from the terminal device. In this way, even in darkness, the user can still sense that the camera is popping up, thereby improving user experience.

With reference to the third aspect, in some implementations of the third aspect, the control unit is further configured to: in a process of controlling the camera to close and retract back to the terminal device, control the audio player to play second audio, where the second audio is used to indicate that the terminal device is closing the camera.

In this embodiment of this application, the terminal device plays a voice prompt in the process in which the camera retracts back to the terminal device. In this way, even in darkness, the user can still sense that the camera is retracting back, thereby improving user experience.

According to a fourth aspect, a terminal device is further provided, including the camera control apparatus according to the second aspect, the third aspect, or any possible implementation thereof and a camera. The camera control apparatus is configured to control the camera to pop up from the terminal device, or control the camera to retract back to the terminal device.

According to a fifth aspect, this application provides a camera control apparatus. The apparatus includes a memory, a processor, and instructions that are stored in the memory and that can be run on the processor. The memory, the processor, and the transceiver communicate with each other by using an internal connection path. The processor executes the instructions to enable the apparatus to implement the method according to any one of the first aspect or the possible implementations of the first aspect.

Optionally, the processing apparatus may be a terminal device.

According to a sixth aspect, a computer-readable medium is provided, and is configured to store a computer program. The computer program includes instructions for implementing the method according to any one of the first aspect or the possible implementations of the first aspect.

According to a seventh aspect, a computer program product is provided. The computer program product includes instructions. When the instructions are run on a computer, the computer is enabled to implement the method according to any one of the first aspect or the possible implementations of the first aspect.

According to an eighth aspect, a chip apparatus is provided, including an input interface, an output interface, at least one processor, and a memory. The input interface, the output interface, the processor, and the memory communicate with each other by using an internal connection path. The processor is configured to execute code in the memory; and when the processor executes the code, the chip apparatus implements the method according to any one of the first aspect or the possible implementations of the first aspect.

### BRIEF DESCRIPTION OF DRAWINGS

FIG. 1 is a schematic diagram of a terminal device according to an embodiment of this application;
FIG. 2 shows an example in which a pop-up camera is retracted back according to an embodiment of this application;
FIG. 3 shows an example in which a pop-up camera is popped up according to an embodiment of this application;
FIG. 4 is a schematic flowchart of a camera control method according to an embodiment of this application;
FIG. 5 shows an example of an interface of a terminal device;
FIG. 6 shows an example of a facial information collection interface of a terminal device;
FIG. 7 shows an example of an interface that is of the terminal device and that prompts whether to create a user account;
FIG. 8 shows an example of an interface that is of the terminal device and that prompts to input user information;
FIG. 9 shows an example of an interface that is of the terminal device and that prompts to select an account type;
FIG. 10 shows an example of an interface that is of the terminal device and that prompts to complete a user profile;
FIG. 11 shows an example of an interface that is of the terminal device and that prompts whether to record facial information;
FIG. 12A shows another example of a facial information recording interface of a terminal device;
FIG. 12B shows another example of a facial information recording interface of a terminal device;
FIG. 13 shows an example of an interface that is of the terminal device and that prompts to select a training mode;
FIG. 14 shows an example of an interface that is of the terminal device and that prompts to select a training course;
FIG. 15 shows another example of an interface that is of the terminal device and that prompts to select a training course;
FIG. 16 shows another example of an interface that is of the terminal device and that prompts to select a training course;
FIG. 17 shows an example of an interface that is of the terminal device and that plays a training course;
FIG. 18 shows an example of an interface that is of the terminal device and that prompts a user to correct a movement;
FIG. 19 shows another example of an interface that is of the terminal device and that plays a training course;
FIG. 20 is a schematic flowchart of another camera control method according to an embodiment of this application;
FIG. 21 is a schematic block diagram of another terminal device according to an embodiment of this application; and
FIG. 22 is a schematic diagram of another terminal device according to an embodiment of this application.

### DESCRIPTION OF EMBODIMENTS

The following describes technical solutions of this application with reference to accompanying drawings.

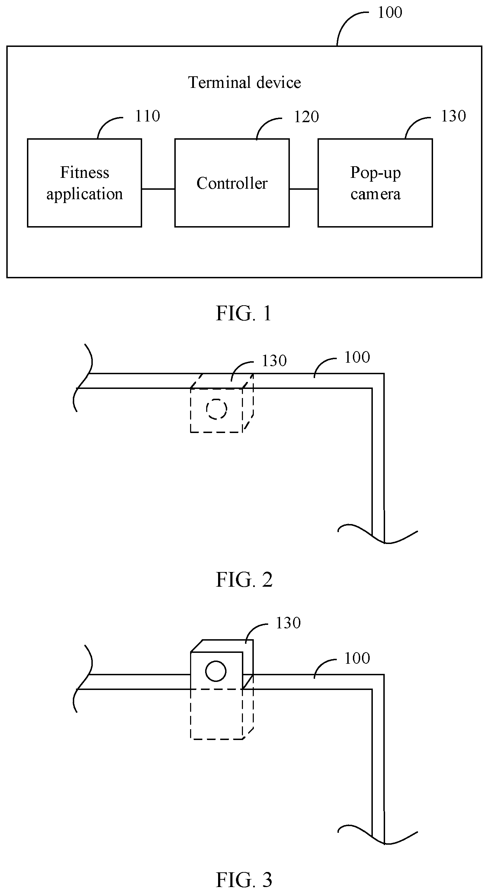

FIG. 1 is a schematic diagram of a terminal device 100 according to an embodiment of this application. As shown in FIG. 1, the terminal device includes a fitness application 110, a controller 120, and a pop-up camera 130. For example, the terminal device 100 may be an electronic device with a display, such as a smart TV, a tablet computer, or a smartphone; or an electronic device without a display, such as a sports band, a smartwatch, or smart glasses. This is not limited in this embodiment of this application.

The fitness application 110 is an application installed in the terminal device 100. The fitness application 110 can provide items such as a fitness course or a motion-sensing game based on a requirement of a user, to meet an exercise or entertainment requirement of the user. For example, the fitness application 100 can provide fitness courses or fitness games such as an abs workout course, a stretching course, a body shaping course, aerobics, running, and dancing.

The controller 120 can control the pop-up camera 130 to start or close based on whether the user needs to use the camera in the fitness application 110. For example, when the user needs to use the camera in the fitness application 110, the controller 120 controls the pop-up camera 130 to start and pop up and to obtain an image or a video including a user movement. For example, when the user does not need to use the camera in the fitness application 110, the controller 120 controls the pop-up camera to close and retract back and not to obtain an image or a video including a user movement.

In some specific examples, the user movement includes a movement made by the user by imitating a movement tutorial in a fitness course or a fitness game, including a movement of the user torso, a movement of limbs, a movement of the head, and/or the like. This is not limited in this embodiment of this application. For example, the user movement may further include a breathe-in movement, a breathe-out movement, or the like of the user in the fitness course.

In some possible implementations of this application, the terminal device 100 may be installed on fitness equipment, so that the user can watch a display interface of the terminal device in a process of exercise on the fitness equipment, and the pop-up camera 130 in the terminal device 100 can collect a video or an image including a user movement, thereby implementing interaction between the user and the terminal device 100.

In some possible implementations, the terminal device 100 may alternatively be disposed separately, for example, may be a smart TV disposed in a living room. The user can take a fitness course or experience a motion sensing game by using the terminal device 100. In addition, the camera in the terminal device 100 can collect a video or an image including a user movement, thereby implementing interaction between the user and the terminal device 100.

In some possible implementations, the camera may be referred to as a pop-up camera or a hidden camera. The camera is hidden in the terminal device when the camera is in a closed state. In this case, the user cannot see the camera on the terminal device. The camera pops up from the terminal device when the camera is in a started state. In this case, the user can observe the camera.

Herein, that the camera pops up from the terminal device may be a process in which the camera changes from a state of being hidden in the terminal device to a state in which the camera can be observed by the user. Specifically, the camera may slide, rotate, or eject out from the terminal device. This is not limited in this embodiment of this application.

In addition, that the camera retracts back to the terminal device may be a process in which the camera changes from a state in which the camera can be observed by the user to a state of being hidden in the terminal device. Specifically, the camera may slide, rotate, or eject into the terminal device. This is not limited in this embodiment of this application.

FIG. 2 shows an example in which the pop-up camera 130 is retracted back. As shown in FIG. 2, when the user does not use the pop-up camera 130, the pop-up camera 130 is disposed to hide inside the terminal device 100 (as indicated by dashed lines in FIG. 2). In this case, the user cannot observe the camera on a surface of the terminal device 100. In some possible descriptions, the pop-up camera 130 may alternatively be referred to as a hidden camera. This is not limited in this embodiment of this application.

FIG. 3 shows an example in which the pop-up camera 130 is popped up. As shown in FIG. 3, when the user uses the pop-up camera 130 to collect a video or an image, the pop-up camera 130 pops up from the inside of the terminal device 100 (that is, the camera stretches out of one end of the terminal device 100) and aims at the user.

In some possible implementations, during use, the camera may alternatively tilt forward by a specific angle or rotate by a specific angle based on a location of a photographed object (for example, the user), to obtain a video or an image of the user from an optimal angle.

In some optional embodiments, the pop-up camera may be a red green blue (red green blue, RGB) camera, a three-dimensional (three direction, 3D) camera, a structured-light camera, a binocular camera, or the like. This is not limited in this embodiment of this application. For example, the 3D camera may be a time-of-flight (time of flight, TOF) stereo depth-sensing camera. The TOF stereo depth-sensing camera can obtain three-dimensional data of a user movement. This is favorable for more accurately determining whether the user movement is standard. However, this embodiment of this application is not limited thereto.

It should be noted that FIG. 2 or FIG. 3 shows an example of the pop-up camera 130. However, this embodiment of this application is not limited thereto. For example, one or two or more pop-up cameras may be disposed in the terminal device 100. This is not limited in this embodiment of this application.

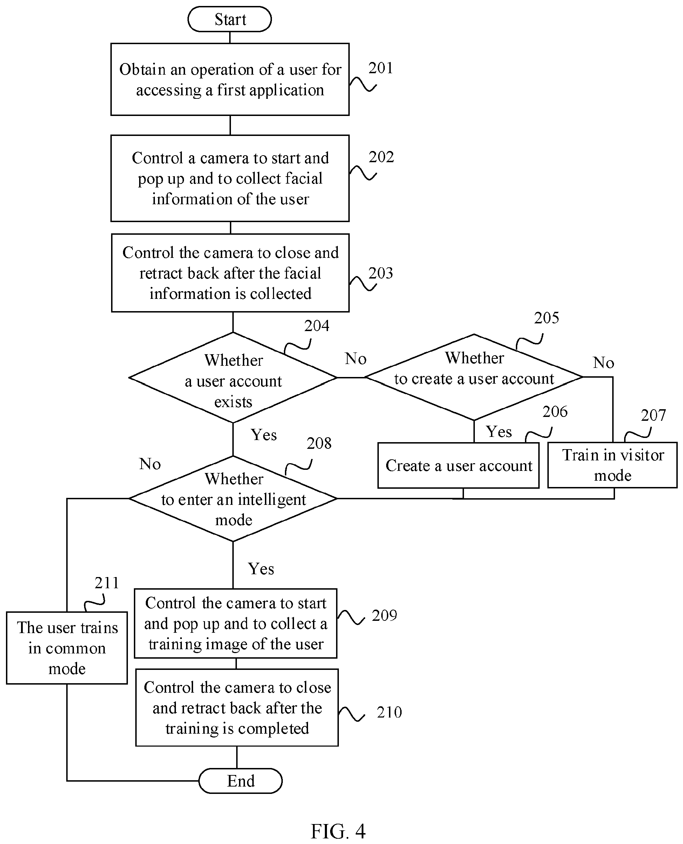

FIG. 4 is a schematic flowchart of a camera control method according to an embodiment of this application. In some possible implementations, the method may be performed by the controller 120 in the terminal device 100 in FIG. 1. As shown in FIG. 4, the method includes step 401 and step 4.

It should be understood that FIG. 4 shows steps or operations of the camera control method. However, these steps or operations are merely an example. In this embodiment of this application, other operations or variations of the operations in FIG. 4 may be further performed. In addition, the steps in FIG. 4 may be performed in a sequence different from that shown in FIG. 4, and possibly, not all the operations in FIG. 4 need to be performed.

201. Obtain an instruction of a user for accessing a first application.

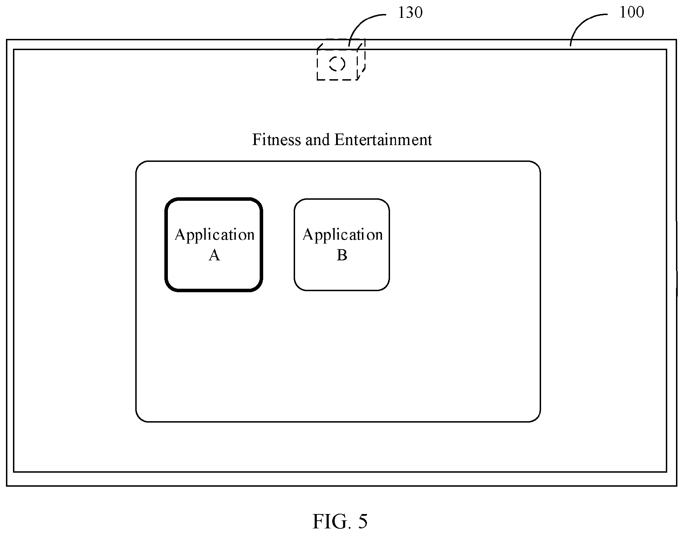

For example, the first application may be the fitness application 100 in FIG. 1. The user may input, in a user interface presented by the terminal device, the instruction for accessing the first application. After the corresponding terminal device obtains the instruction input by the user, the user accesses the first application. FIG. 5 shows an example of an interface of the terminal device 100. As shown in FIG. 5, a Fitness and Entertainment folder may be set in the terminal device 100, and the Fitness and Entertainment folder may include at least one fitness application 100, which may be, for example, an application A and an application B. This is not limited in this embodiment of this application.

In this embodiment of this application, the instruction input by the user may be obtained by using a display. For example, the display may obtain, by using a sensor, an instruction input to the display by the user by using a remote control. Alternatively, the display may be a touchscreen, and the instruction input by the user may be obtained by using the touchscreen. This embodiment of this application is not limited thereto.

In a specific example, when the terminal device is a smart TV, the user may input, through selection by using a remote control, an instruction for accessing the application A. For example, the icon frame of the application A becoming bold represents that the user has selected the icon, and the user may access the selected application A by using an OK button. In another specific example, when the terminal device is a touchscreen device, the user may input, by using an input area (for example, an icon display area) of the touchscreen device, an instruction for accessing an application. For example, the user may input an instruction for accessing the application A by touching an icon display area of the application A.

It should be noted that, as shown in FIG. 5, in a process of performing step 201, the pop-up camera 130 may be hidden (that is, retracted back) in the terminal device 100. The user can determine, based on a hidden state (which may also be referred to as a retracted state) of the pop-up camera, that the camera is in a closed state, that is, in a user privacy protection state in this case.

202. Control the camera to start and pop up and to collect facial information of the user.

After obtaining the instruction of the user for accessing the first application, the controller 120 may control, in response to the instruction, the pop-up camera to start and pop up and to collect the facial information of the user after the pop-up camera 130 is started and popped up from the terminal device 100. For example, the facial information of the user may include at least one of face shape information, face profile information, information about the five sense organs, skin color information, iris information, and the like of the user; or may further include other facial feature information, for example, brow ridge information of the user. This is not limited in this embodiment of this application.

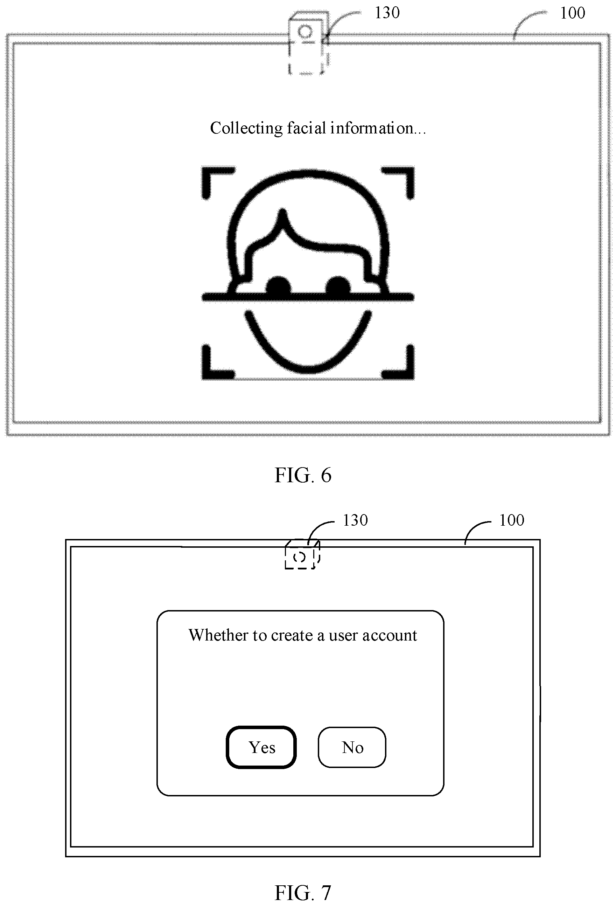

FIG. 6 shows an example of a user interface of the terminal device 100 for collecting the facial information of the user. It can be learned that, in a process of performing step 202, the pop-up camera 130 pops up from the terminal device 100. The user can determine, based on the popped-up state of the pop-up camera, that the camera is in a started state, that is, not in a user privacy protection state in this case.

In some possible implementations, when step 202 is performed, the pop-up camera may be controlled to start while popping up. This can shorten a time interval from when the camera pops up from the terminal device to when photographing begins, thereby shortening a wait time for the user and improving user experience. Alternatively, in another possible implementation, the pop-up camera may be controlled to start after popping up or pop up after starting. This is not limited in this embodiment of this application.

In some optional embodiments, the terminal device may further play a voice prompt in the process in which the camera pops up from the terminal device. In this way, even in darkness, the user can still sense that the camera is popping up, thereby improving user experience. For example, in step 202, when the camera is popping up from the terminal device, the terminal device may play a voice "Please note that the camera is starting and is about to record facial information." Alternatively, the terminal device may play a specific hardware-level mechanical sound prompt or the like, to prompt the user that the camera is starting and popping up.

In some possible implementations, when a plurality of pop-up cameras are disposed in the terminal device, only one of the pop-up cameras may start and pop up in step 202, to collect the facial information of the user. For example, the pop-up camera that is popped up may be a camera disposed at a center position of the terminal device.

203. Control the camera to retract back after facial information collection is completed.

Specifically, after the terminal device 100 completes collection of the facial information, the controller 120 controls the pop-up camera to close and retracts the pop-up camera.

Therefore, the pop-up camera 130 is popped up from the terminal device when the terminal device 100 is collecting the facial information of the user, and the pop-up camera 130 is hidden in the terminal device 100 when the terminal device is not collecting the facial information of the user. In this way, the user can clearly sense whether the camera is in use at a current moment based on whether the pop-up camera 130 is popped up, thereby protecting privacy of the user and improving user experience.

In some possible implementations, when step 203 is performed, the pop-up camera may be controlled to close while retracting back. This can shorten a time for the camera to retract back to the terminal device, thereby improving user experience. Alternatively, in another possible implementation, the pop-up camera may be controlled to retract back after closing or close after retracting back. This is not limited in this embodiment of this application.

In some optional embodiments, the terminal device may further play a voice prompt in the process in which the camera retracts back to the terminal device. In this way, even in darkness, the user can still sense that the camera is retracting back, thereby improving user experience. For example, in step 203, when the camera is retracting back to the terminal device, the terminal device may play a voice "closing camera." Alternatively, the terminal device may play a specific hardware-level mechanical sound prompt or the like, to prompt the user that the camera is closing and popping up. In this embodiment of this application, the mechanical sound prompt played when the camera is popping up may be the same as or different from the mechanical sound prompt played when the camera is retracting back. This is not limited in this embodiment of this application.

In some optional embodiments, alternatively, after collection of the facial information is completed, an action of controlling the camera to retract back may not be performed. In other words, in this case, the camera may be maintained popped up from the user equipment. When it is determined that it is unnecessary to collect an image or a video of the user in a subsequent fitness training process of the user, the camera may be controlled to close and retract back.

In some possible implementations, the terminal device 100 may further include an indicator. When the camera pops up from the terminal device, the indicator may be further controlled to turn on. The indicator being turned on represents that the camera is in a started state. When the camera is hidden in the terminal device, the indicator is in an off state. Therefore, in this embodiment of this application, turning on the indicator when the camera pops up can further enable the user to sense whether the camera is in use at a current moment, thereby protecting privacy of the user and improving user experience.

204. Determine whether an account of the user exists.

After collecting the facial information of the user, the terminal device may perform facial recognition based on the collected facial information of the user, to determine whether an account of the user exists. When it is determined that an account of the user exists, step 208 is performed. When it is determined that an account of the user does not exist, step 205 is performed.

For example, a database of the terminal device may store an account of at least one user. In an account of a user, facial information of the user may be associated with user attribute information of the user, so that the account of the user can be queried based on the facial information of the user. Herein, the attribute information of the user is, for example, at least one of a nickname, the gender, the height, the weight, vital statistics, physical fitness test information, and other information of the user.

Optionally, an account of a user may further include information such as a training record of the user or an intelligent training plan designated for the user based on a fitness requirement or an actual physical condition of the user. In some possible implementations, the database may be stored locally in the terminal device or stored in a cloud storage device corresponding to the user or the terminal device. This is not limited in this embodiment of this application.

After the facial information of the user is collected, the facial information of the user may be matched with facial information in the account stored in the database of the terminal device. If the currently collected facial information is successfully matched with facial information corresponding to an account in the database, the account is accessed. If the currently collected facial information fails to match with facial information corresponding to any account in the database, step 205 is performed.

205. Determine whether to create a user account.

When it is determined to create a user account, perform step 206. When it is determined not to create a user account, perform step 207.

For example, the terminal device 100 may display an interface shown in FIG. 7 to the user, to inquire the user whether it is necessary to create a user account. As shown in FIG. 7, when the terminal device 100 is a smart TV, the user may select an operation instruction "Yes" or "No" by using a remote control. When the terminal device 100 is a touchscreen device, the user may input an operation instruction by touching an input area corresponding to "Yes" or "No" on the touchscreen device. When an operation instruction "Yes" input by the user is obtained, it is determined to create an account corresponding to the user, that is, step 206 is performed. When an operation instruction "No" input by the user is obtained, it is determined not to create an account corresponding to the user, that is, step 207 is performed.

206. Create the user account.

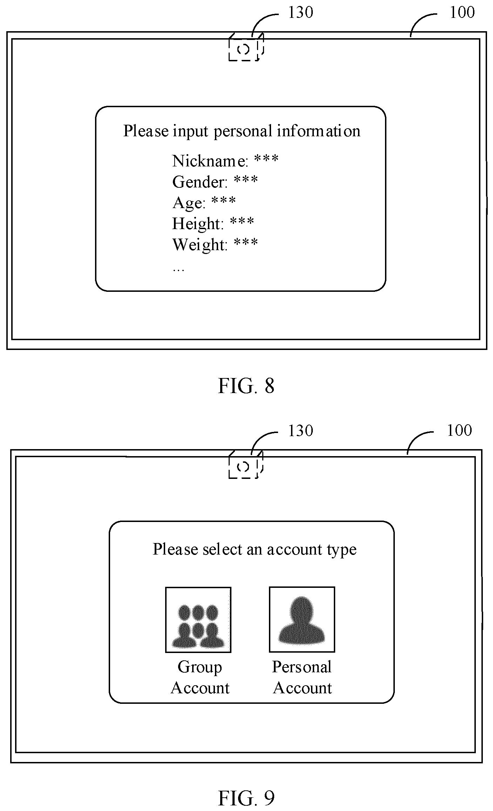

In a possible implementation, a personal account corresponding to the user may be created based on the facial information of the user collected in step 202. The personal account may include only information about the user. For example, the personal account of the user includes the facial information of the user. In addition, the user may be further prompted to input personal attribute information. As shown in FIG. 8, the user may input information such as a nickname, the gender, the age, the height, and the weight of the user in an interface, so that the attribute information of the user is associated with the facial information of the user.

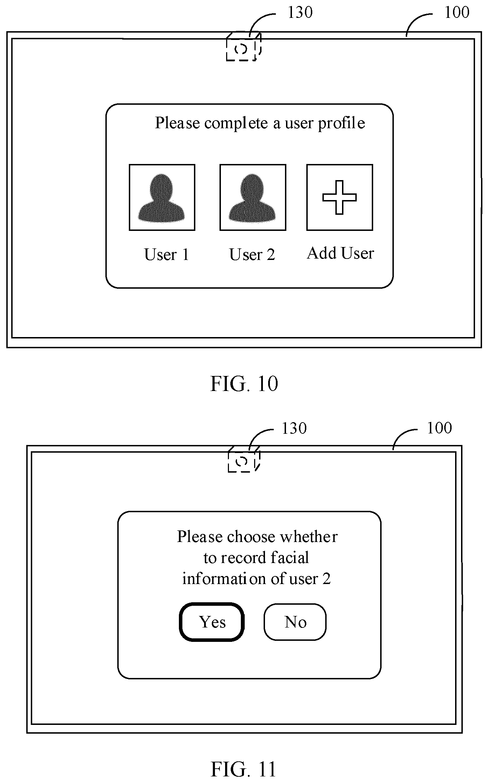

In some optional embodiments, alternatively, a group account may be created for the user. The group account may include information about two, three, or more users. In a possible implementation, the terminal device 100 may display an interface shown in FIG. 9, to prompt the user to select an account type, which includes Group Account and Personal Account. When the user selects Group Account, an interface shown in FIG. 10 may be displayed to the user, to prompt the user to complete a user profile. For example, the user may input a user profile of a user 1 in the group account. The user 1 may be the user currently operating the terminal device. After completing the profile of the user 1, a user 2 may be added by using an "Add User" option. A profile of the user 2 is completed. The user 2 may be another person except the user currently operating the terminal device 100, for example, a family member of the user. The user may further add more user items by using the "Add User" option. This is not limited in this embodiment of this application. In this embodiment of this application, a user item of each user may include at least one of a nickname, the gender, the age, the height, the weight, and other information of the user.

In some possible manners, when a user profile is completed, facial information of another user except the current user may be further recorded. For example, after the user inputs at least one of a nickname, the gender, the age, the height, the weight, and other information of the user 2, an interface shown in FIG. 11 may be displayed to the user, to prompt the user whether to choose to record facial information of the user 2. When the user selects "Yes", the camera may be started and popped up, to collect the facial information of the user 2. For example, an interface for collecting the facial information of the user 2 may be the same as that in FIG. 6.

In this case, the pop-up camera 130 starts and pops up from the terminal device 100. After the pop-up camera 130 starts and pops up from the terminal device 100, the facial information of the user 2 may be collected. In this way, the user can determine, based on the popped-up state of the pop-up camera, that the camera is in a started state, that is, not in a user privacy protection state in this case. In some possible implementations, after the facial information of the user 2 is collected, the pop-up camera 130 may be controlled to close and retract back to the terminal device.

In a possible implementation, when the user selects "Group Account" in the interface in FIG. 9, the pop-up camera 130 may be controlled to start and pop up from the terminal device 100. After the pop-up camera 130 starts and pops up from the terminal device 100, the pop-up camera 120 may simultaneously collect facial information of a plurality of users.

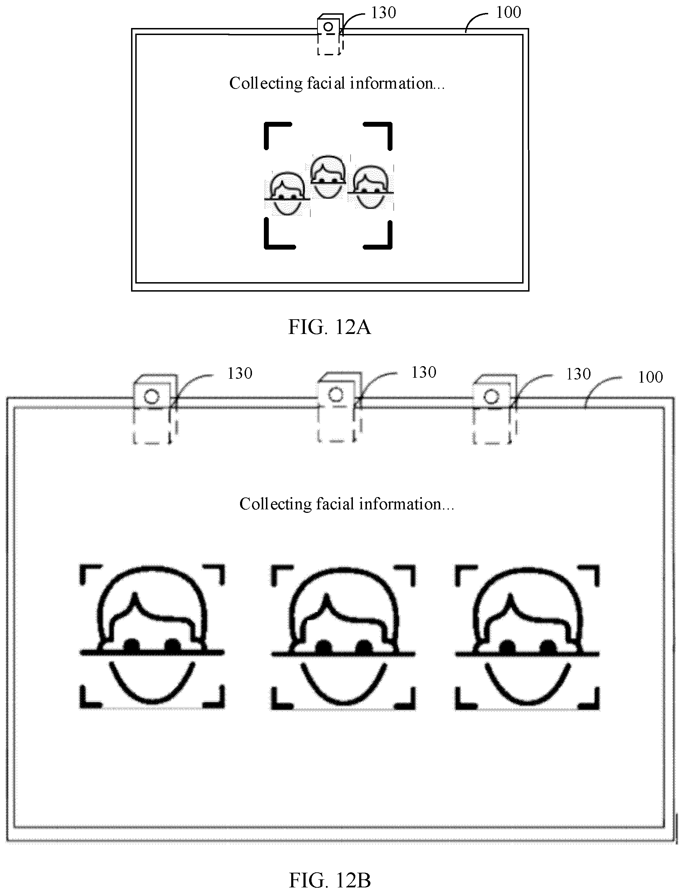

In some possible implementations, when facial information of a plurality of users is collected simultaneously, one pop-up camera may start and pop up. FIG. 12A shows an example of an interface for collecting facial information of users of a group account. As shown in FIG. 12A, the pop-up camera 130 may simultaneously collect facial information of three users.

In some possible implementations, when facial information of a plurality of users is collected simultaneously, a plurality of pop-up cameras may start and pop up simultaneously. FIG. 12B shows an example of an interface for collecting facial information of users of a group account. As shown in FIG. 12B, three pop-up cameras 130 may simultaneously collect facial information of three users.

Correspondingly, the terminal device may store the obtained facial information of all the users in the group account. In some possible implementations, the terminal device may create a corresponding user item for each user, and an icon corresponding to each user item may be an avatar of the user corresponding to the item. Optionally, in this case, the terminal device may display the interface shown in FIG. 10 to the user, to remind the user to complete a user profile. Specifically, for a process in which the user completes each user item, refer to the foregoing descriptions. For brevity, details are not described herein again.

In some possible cases, after collecting the facial information of the group account, the pop-up camera 130 may close and retract back to the terminal device 100.

Therefore, the pop-up camera is popped up from the terminal device when the terminal device 100 is collecting the facial information of the user, and the pop-up camera is hidden in the terminal device when the terminal device is not collecting the facial information of the user. In this way, the user can clearly sense whether the camera is in use at a current moment based on whether the pop-up camera is popped up, thereby protecting privacy of the user and improving user experience.

In some possible implementations, when the application A is accessed next time and facial information of a user is collected, when the facial information of the user matches facial information of a user in the group account, the user can access the group user. For example, after the facial information of the user 2 is recorded, when the application A is accessed again next time and the facial information of the user 2 is collected, the group account corresponding to the user 2 may be accessed in this case.

207. Train in visitor mode.

For example, when the user selects "No" in the interface shown in FIG. 7, that is, chooses not to create a user account, the user trains in visitor mode. When the user trains in visitor mode, after the training is completed, data of the current training is not recorded.

208. Determine whether to enter an intelligent mode.

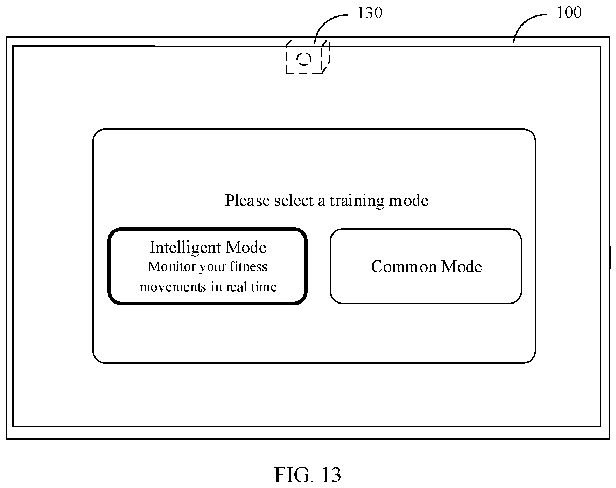

For example, after the user accesses the account of the user or determines to train in visitor mode, the user may be prompted whether it is necessary to monitor a movement of the user. For example, an interface shown in FIG. 13 may be displayed to the user, to prompt the user to select a training mode. Training modes include an intelligent mode and a common mode. In intelligent mode, the terminal device can monitor a movement of the user and remind the user when the movement of the user is not standard. In common mode, the terminal device cannot monitor a movement of the user and does not remind the user when the movement of the user is not standard.

Optionally, the user may be prompted that "your exercise movements can be monitored in real time in intelligent mode" in an icon area of the intelligent mode, or may be prompted that "your exercise movements can be monitored in real time in intelligent mode" by using a voice, to remind the user that the camera is started to obtain an exercise movement of the user in intelligent mode.

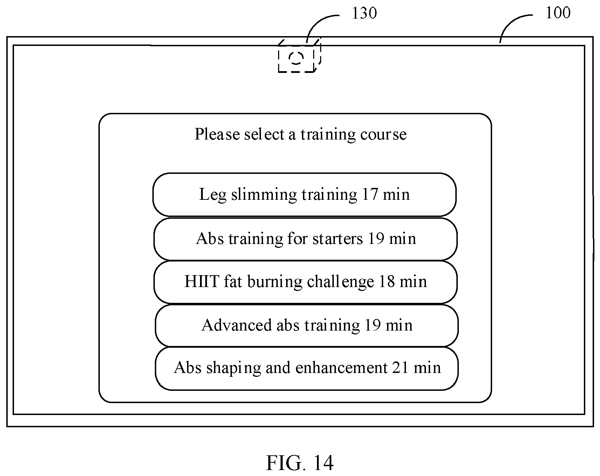

The user may input, in a display interface of the terminal device, an instruction for entering the intelligent mode. The corresponding terminal device may obtain the instruction for entering the intelligent mode input by the user and enter the intelligent mode. After the user selects the intelligent mode, a fitness course suitable for the user may be recommended to the user. FIG. 14 shows an example of an interface for selecting a training course. As shown in FIG. 14, a leg slimming training course, an abs training course for starters, a high-intensity interval training (high-intensity interval training, HIIT) fat burning challenge course, an advanced abs training course, and an abs shaping and enhancement course, or another course may be displayed to the user for selection by the user. Optionally, information about each course may be further displayed, for example, training duration of the course or a current quantity of trainees. This is not limited in this embodiment of this application. For example, the user may further page down or swipe down to select more fitness courses.

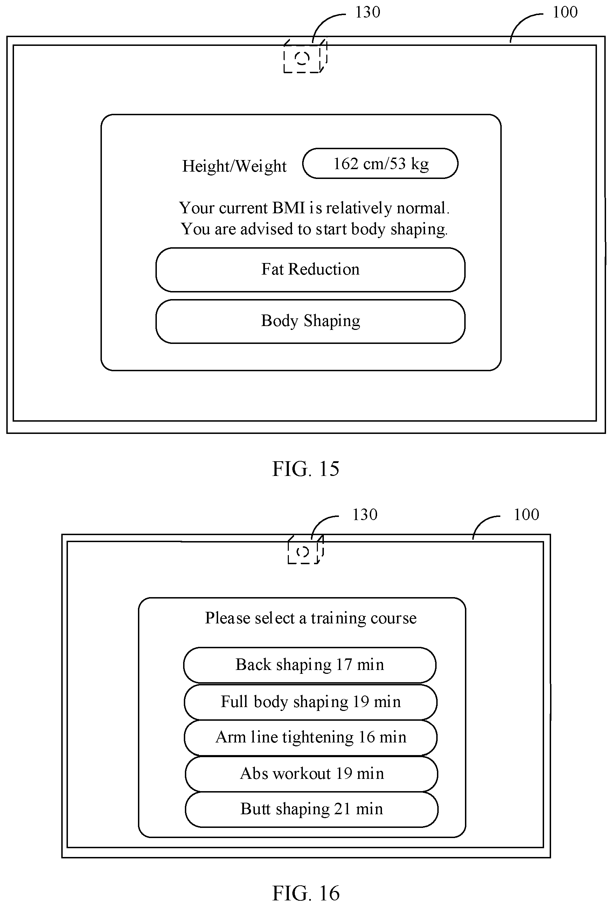

For example, a fitness course type may be recommended to the user based on a physical condition such as the height and weight of the user. For example, as shown in FIG. 15, when the height/weight of the user is 162 cm/53 kg, the user may be prompted that a current body mass index (body mass index, BMI) is relatively normal, and the user may be recommended to start body shaping. For example, after the user selects body shaping, a shaping fitness course may be displayed to the user. For example, as shown in FIG. 16, a back shaping course, a full body shaping course, an arm line tightening course, an abs workout course, and a butt shaping course, or another course may be displayed to the user for selection by the user. Optionally, information about each course may be further displayed, for example, training duration of the course or a current quantity of trainees. This is not limited in this embodiment of this application. For example, the user may further page down or swipe down to select more body shaping courses.

After an intelligent training course selected by the user is obtained, step 209 is performed.

The user may input, in the display interface of the terminal device, an instruction for entering the common mode. The corresponding terminal device may obtain the instruction input by the user for entering the common mode and enter the common mode. After the user selects the common mode, a fitness course may be recommended to the user. For example, in common mode, the interface shown in FIG. 14 may be used to recommend a fitness course for the user. This is not limited in this embodiment of this application.

209. Control the camera to start and pop up and to collect a training image of the user.

In intelligent mode, the user may select a course in the display interface of the terminal device. For example, the user may input an instruction for accessing a fitness course. After obtaining the instruction, the terminal device plays an exercise movement tutorial in the fitness course. In addition, in response to the instruction, the terminal device controls the pop-up camera 130 to start and pop up from the terminal device 100 and to obtain an image including a movement of the user after the pop-up camera 130 starts and pops up from the terminal device 100, for example, to take a photo of the user to obtain a user photo or to take a video of the user to obtain a user video. Herein, the user movement is a movement made by the user by imitating the movement tutorial in the fitness course.

Therefore, the pop-up camera 130 is popped up from the terminal device when the terminal device 100 is taking a photo or a video of the user, and the pop-up camera 130 is hidden in the terminal device 100 when the terminal device is not taking a photo or a video of the user. In this way, the user can clearly sense whether the camera is in use at a current moment based on whether the pop-up camera 130 is popped up, thereby protecting privacy of the user and improving user experience.

In some possible implementations, the pop-up camera may be controlled to start while popping up. This can shorten a time interval from when the camera pops up from the terminal device to when photographing begins, thereby shortening a wait time for the user and improving user experience. Alternatively, in another implementation, the pop-up camera may be controlled to start after popping up or pop up after starting. This is not limited in this embodiment of this application.

In some optional embodiments, the terminal device may further play a voice prompt in the process in which the camera pops up from the terminal device. In this way, even in darkness, the user can still sense that the camera is popping up, thereby improving user experience. For example, in step 209, when the camera is popping up from the terminal device, the terminal device may play a voice "Please note that the camera is starting and is about to collect your exercise movement." Alternatively, the terminal device may play a specific hardware-level mechanical sound prompt or the like, to prompt the user that the camera is starting and popping up.

Optionally, in this embodiment of this application, different voice prompts may be played when the pop-up camera is popping up in different cases, to use different prompt voices to prompt an object that needs to be photographed after the camera starts. For example, a voice prompt played in a process in which the pop-up camera pops up to obtain a training video or photo of a user may be different from a voice prompt played in a process in which the pop-up camera pops up to collect facial information of a user. However, this embodiment of this application is not limited thereto.

In some possible implementations, as the user moves left, moves right, squats down, or makes another orientation change, the pop-up camera may be adaptively adjusted to rotate, to obtain an image or a video of the user from an optimal angle. For example, when the user moves left, the pop-up camera may be adjusted to move left. When the user moves right, the pop-up camera may be adjusted to move right. When the user squats down, the pop-up camera may be adjusted to tilt forward. However, this embodiment of this application is not limited thereto.

In some possible implementations, when a plurality of users exercise simultaneously by imitating a fitness tutorial, a plurality of cameras may simultaneously start and pop up to respectively collect images including movements of the users. For example, when two users exercise simultaneously, two cameras may start and pop up, and each camera collects an exercise movement of a user closer to the camera.

After the image including the user movement is obtained, the terminal device may compare the movement with a movement tutorial corresponding to the movement; and determine, based on a result of the comparison, whether to prompt the user to correct the movement. For example, movement data of each body part in the movement tutorial and movement data of each body part in the user movement may be obtained, and movement data in the movement tutorial and movement data of the user movement are compared for a same part, to determine whether a movement of the part of the user needs to be corrected. For example, when a difference between the movement data in the movement tutorial and the movement data of the user movement exceeds a preset threshold, it may be determined that the movement of the user needs to be corrected; or when the difference is less than the preset threshold, it may be determined that the movement of the user does not need to be corrected. When it is determined that the movement of the user needs to be corrected, the user may be prompted by using a voice, a text, an image, or the like.

In some possible implementations, the movement tutorial in the first application and the image or video that includes the user movement and that is obtained by the camera may be played by using the display. In this way, the user can directly observe the movement tutorial and the movement made by the user. This helps the user learn, through comparison, whether the movement made by the user is standard, thereby helping improve user experience.

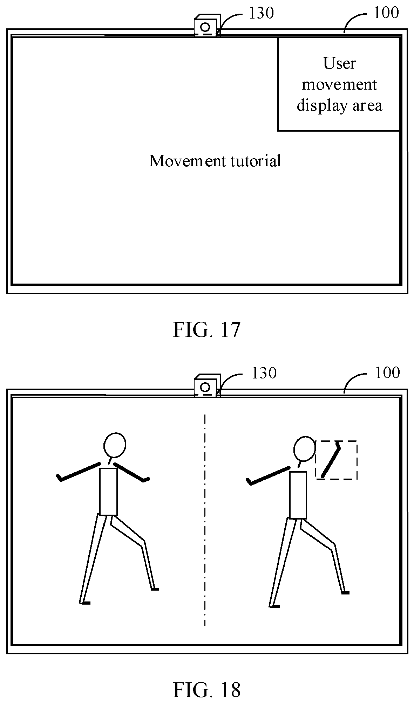

FIG. 17 is a schematic diagram of an interface for training in intelligent mode by a user by using a personal account. As shown in FIG. 17, a major part of the interface (for example, a central part of the interface) of the terminal device plays a movement tutorial of a fitness course, and a user movement display area in the interface of the terminal device may play a movement video that is of the user and that is photographed by using the pop-up camera. For example, in FIG. 17, the user movement display area is located in a part in an upper-right corner of the interface of the terminal device. In another possible implementation, the user movement display area may alternatively be located in an upper-left corner, a lower-left corner, a lower-right corner, or another part of the interface of the terminal device. This is not limited in this embodiment of this application. Optionally, the user may further select a ratio of the user movement display area to the interface of the terminal device, which may be, for example, 1/2, 1/3, 1/4, or another value. Optionally, the user may further choose to interchange the user movement display area and a movement tutorial display area. This is not limited in this embodiment of this application.

For example, when it is determined that the movement of the user needs to be corrected, an interface shown in FIG. 18 may be displayed to the user. An interface occupied by the movement tutorial display area in FIG. 17 may be zoomed out, and an interface occupied by the user movement display area may be zoomed in. In a possible case, a left-half area of the interface of the terminal device may display the movement tutorial, and a right-half area may display the user movement. A part of the user that moves incorrectly may be marked in a user movement part. For example, in the movement tutorial, the left arm part should be in a stretched straight forward state, but the left arm in the movement of the user is in a raised up state. In this case, the left arm part in the movement of the user may be marked by using a dashed-line box, and the user is prompted by using a voice that the left arm should be raised up.

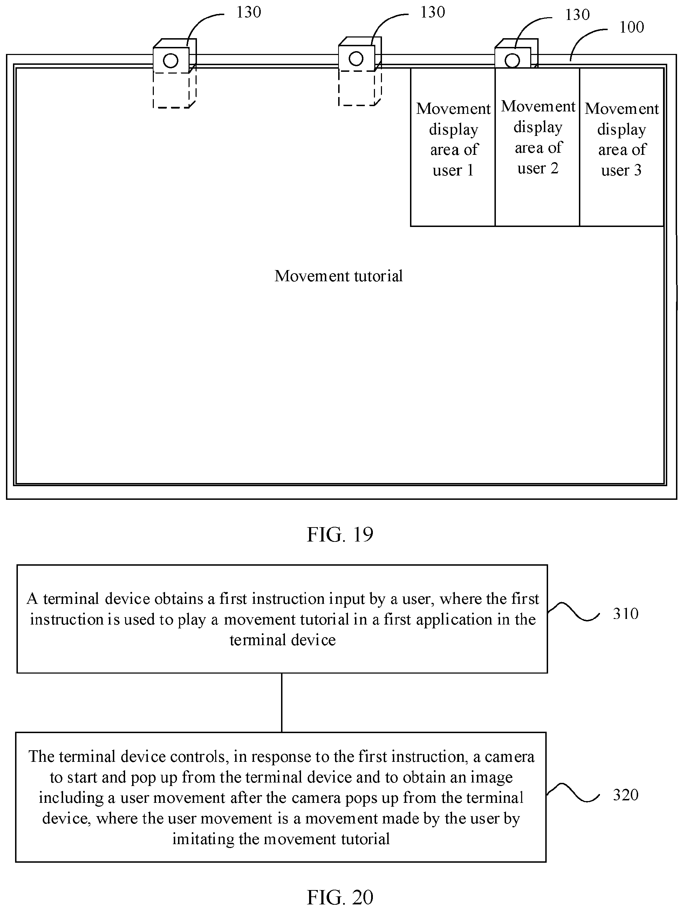

FIG. 19 is a schematic diagram of an interface for training in intelligent mode by users by using a group account. Different from FIG. 17, when the users use the group account, a plurality of cameras may pop up to respectively obtain images including movements of the users, or one camera may pop up to obtain an image including movements of the plurality of users. In a possible implementation, a plurality of user movement display areas may be disposed to respectively display movements of the plurality of users. For example, a movement display area of a user 1 may display a movement of the user 1, a movement display area of a user 2 may display a movement of the user 2, a movement display area of a user 3 may display a movement of the user 3, and so on. This is not limited in this embodiment of this application. In addition, after the movements of the plurality of users are obtained, the movements of the plurality of users may be separately compared with a movement tutorial, and each user is separately prompted. Specifically, for a process of comparing a movement of each user with the movement tutorial and a process of prompting each user, refer to the comparison process and the prompting process of the single user using the personal account. For brevity, details are not described herein again.

In some possible implementations, after step 202, that is, after the facial information of the user is collected, if the pop-up camera does not close and retract back, in step 209, there is no need to start and pop up the pop-up camera again.

210. Control the camera to close and retract back after the training is completed.

After the user completes the training, playing of the fitness course is stopped, and the pop-up camera 130 stops obtaining an image including a movement of the user, for example, stops taking a photo of the user or stops taking a video of the user. In this case, the pop-up camera 130 may be controlled to close and retract back the pop-up camera 130.

Alternatively, in another possible implementation, when the user suspends playing of the fitness course or exits playing of the fitness course, the pop-up camera 130 may be controlled to close and retract back the pop-up camera 130.

Therefore, the pop-up camera 130 is popped up from the terminal device 100 when the terminal device 100 is taking a photo or a video of the user, and the pop-up camera 130 is hidden in the terminal device 100 when the terminal device is not taking a photo or a video of the user. In this way, the user can clearly sense whether the camera is in use at a current moment based on whether the pop-up camera 130 is popped up, thereby protecting privacy of the user and improving user experience.

In some possible implementations, the pop-up camera may be controlled to close while retracting back. This can shorten a time for the camera to retract back to the terminal device, thereby improving user experience. Alternatively, in another possible implementation, the pop-up camera may be controlled to retract back after closing or close after retracting back. This is not limited in this embodiment of this application.

In some optional embodiments, the terminal device may further play a voice prompt in the process in which the camera retracts back to the terminal device. In this way, even in darkness, the user can still sense that the camera is retracting back, thereby improving user experience. For example, in step 210, when the camera is retracting back to the terminal device, the terminal device may play a voice "closing camera." Alternatively, the terminal device may play a specific hardware-level mechanical sound prompt or the like, to prompt the user that the camera is closing and popping up. In this embodiment of this application, the mechanical sound prompt played when the camera is popping up may be different from the mechanical sound prompt played when the camera is retracting back. This is not limited in this embodiment of this application. Prompt voices being different in a pop-up process and a retracting process can further prompt the user whether the camera is popping up or retracting back, thereby improving user experience. Alternatively, in another possible implementation, prompt voices in the pop-up process and the retracting process may be the same. This is not limited in this embodiment of this application.

In some optional embodiments, in a training process or after training is completed, current training data may be recorded in the account of the user, so as to formulate a next intelligent fitness plan for the user based on the training data.

211. The user trains in common mode.

After the user accesses a fitness course in common mode, an exercise movement tutorial in the fitness course is played. In this case, the camera is maintained in a state of being closed and retracted back to the terminal device. In other words, during fitness training in common mode, a video or an image including a user movement is not collected.

In some possible implementations, if the pop-up camera does not close and retract back after step 202, that is, after collecting the facial information of the user, the pop-up camera needs to close and retract back in step 211. This ensures that a video or an image including a user movement is not collected when the user performs fitness training in common mode.

It should be noted that the display interfaces of the terminal device shown in the foregoing figures are merely used as examples to help persons skilled in the art understand and implement the embodiments of this application, rather than limit a scope of the embodiments of this application. Persons skilled in the art may make variations or modifications based on the foregoing examples. Such variations or modifications should still fall within the scope of the embodiments of this application.

FIG. 20 is a schematic flowchart of a camera control method according to an embodiment of this application. A camera may be the pop-up camera 130 disposed in the terminal device 100 described above. For example, the method may be performed by the terminal device 100. The method includes steps 310 and 320.

310. The terminal device obtains a first instruction input by a user, where the first instruction is used to play a movement tutorial in a first application in the terminal device.

320. The terminal device controls, in response to the first instruction, the camera to start and pop up from the terminal device and to obtain an image including a user movement after the camera pops up from the terminal device, where the user movement is a movement made by the user by imitating the movement tutorial.

Therefore, in this embodiment of this application, the pop-up camera is popped up from the terminal device when the terminal device is taking a photo or a video of the user, and the pop-up camera is hidden in the terminal device when the terminal device is not taking a photo or a video of the user. In this way, the user can clearly sense whether the camera is in use at a current moment based on whether the pop-up camera is popped up, thereby protecting privacy of the user and improving user experience.

For example, the instruction input by the user for accessing the fitness course in step 209 in FIG. 4 may be an example of the first instruction input by the user in step 310. For details about steps 310 and 320, refer to descriptions of step 209 in FIG. 4. For brevity, details are not described herein again.

Optionally, when playing of the movement tutorial is paused, ended, or quitted, the terminal device determines to stop obtaining an image including a user movement. When determining to stop obtaining an image including a user movement, the terminal device controls the camera to close and retract back to the terminal device.

Specifically, for a process of stopping obtaining an image including a user movement and controlling the camera to close and retract back to the terminal device when playing of the movement tutorial is paused, ended, or quitted, refer to descriptions of step 210 in FIG. 4. For brevity, details are not described herein again.

Therefore, in this embodiment of this application, the pop-up camera is popped up from the terminal device when the terminal device is taking a photo or a video of the user, and the pop-up camera is hidden in the terminal device when the terminal device is not taking a photo or a video of the user. In this way, the user can clearly sense whether the camera is in use at a current moment based on whether the pop-up camera is popped up, thereby protecting privacy of the user and improving user experience.

Optionally, the movement tutorial in the first application and an image or a video that includes a user movement and that is obtained by the camera may be played by using a display. In this way, the user can directly observe the movement tutorial and the movement made by the user. This helps the user learn, through comparison, whether the movement made by the user is standard, thereby helping improve user experience.

For details, refer to step 209 in FIG. 4 and descriptions of FIG. 17 to FIG. 19. For brevity, details are not described herein again.

Optionally, the terminal device may further prompt the user whether it is necessary to monitor a movement of the user. Then, the terminal device obtains a second instruction input by the user. The second instruction is used to indicate that the user permits the terminal device to obtain an image including a user movement.

For example, the instruction input by the user for entering the intelligent mode in step 208 in FIG. 4 may be an example of the second instruction. For details, refer to descriptions of step 208 in FIG. 4. For brevity, details are not described herein again.

Therefore, in this embodiment of this application, the terminal device can monitor a movement of the user in real time when the user permits the terminal device to obtain an image including a user movement, and does not monitor a movement of the user when the user does not permit the terminal device to obtain a user movement. In this way, the user can autonomously choose whether to start the camera, thereby further protecting privacy of the user and improving user experience.

Optionally, before obtaining a first operation of the user on the first application, the terminal device may further obtain a third instruction input by the user. The third instruction is used to access the first application. The terminal device may control, in response to the third instruction, the camera to start and pop up from the terminal device and to obtain an image including facial information of the user after the camera pops up from the terminal device. Then, the terminal device accesses an account of the user based on the image including the facial information of the user, where the account of the user stores the facial information of the user.

For example, the instruction input by the user for accessing the first application in step 201 in FIG. 4 may be an example of the third instruction. For details, refer to descriptions of steps 201, 202, and 204 in FIG. 4. For brevity, details are not described herein again.

Therefore, in this embodiment of this application, the pop-up camera is popped up from the terminal device when the terminal device is collecting the facial information of the user, and the pop-up camera is hidden in the terminal device when the terminal device is not collecting the facial information of the user. In this way, the user can clearly sense whether the camera is in use at a current moment based on whether the pop-up camera is popped up, thereby protecting privacy of the user and improving user experience.

Optionally, before accessing an account of the user based on the image including the facial information of the user, the terminal device may further create an account of the user based on the image including the facial information of the user.

For details, refer to descriptions of steps 205 and 206 in FIG. 4. For brevity, details are not described herein again.

Optionally, after the image including the facial information of the user is obtained, the terminal device may control the camera to close and retract back to the terminal device.

For details, refer to descriptions of step 203 in FIG. 4. For brevity, details are not described herein again.

Therefore, in this embodiment of this application, the pop-up camera is popped up from the terminal device when the terminal device is collecting the facial information of the user, and the pop-up camera is hidden in the terminal device when the terminal device is not collecting the facial information of the user. In this way, the user can clearly sense whether the camera is in use at a current moment based on whether the pop-up camera is popped up, thereby protecting privacy of the user and improving user experience.

Optionally, in a process in which the terminal device controls the camera to start and pop up from the terminal device, the terminal device plays first audio, where the first audio is used to indicate that the terminal device is starting the camera.

Therefore, in this embodiment of this application, the terminal device plays a voice prompt in the process in which the camera pops up from the terminal device. In this way, even in darkness, the user can still sense that the camera is popping up, thereby improving user experience.

In some possible implementations, the pop-up camera may be controlled to start while popping up. This can shorten a time interval from when the camera pops up from the terminal device to when photographing begins, thereby shortening a wait time for the user and improving user experience. Optionally, in a process in which the terminal device controls the camera to close and retract back to the terminal device, the terminal device plays second audio, where the second audio is used to indicate that the terminal device is closing the camera.

Therefore, in this embodiment of this application, the terminal device plays a voice prompt in the process in which the camera retracts back to the terminal device. In this way, even in darkness, the user can still sense that the camera is retracting back, thereby improving user experience.

In some possible implementations, the pop-up camera may be controlled to close while retracting back. This can shorten a time for the camera to retract back to the terminal device, thereby improving user experience.

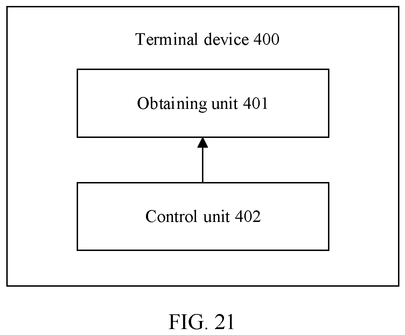

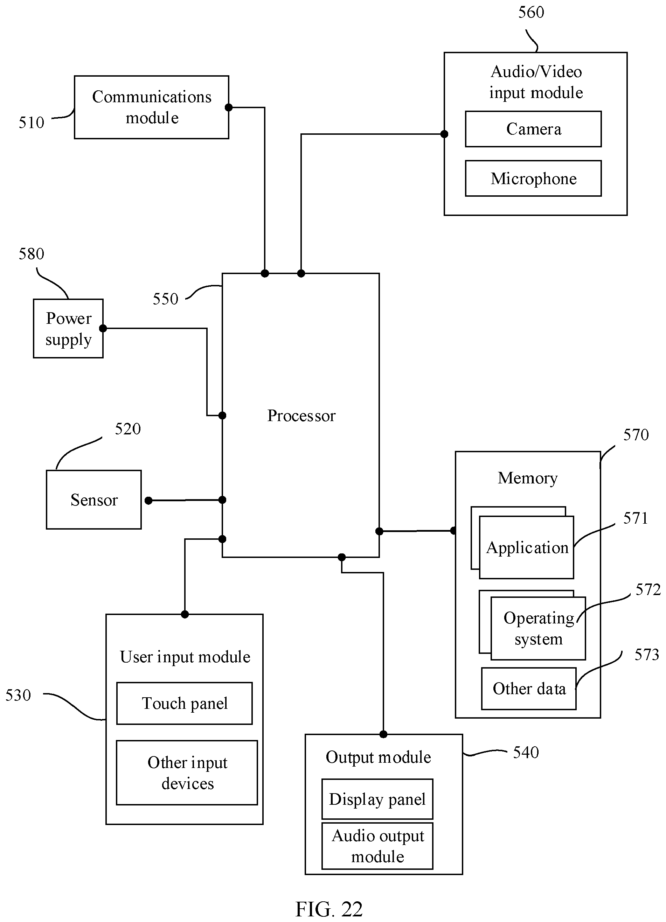

The foregoing describes in detail the camera pop-up method provided in the embodiments of this application with reference to FIG. 1 to FIG. 20. The following describes a terminal device in the embodiments of this application with reference to FIG. 21 and FIG. 22. It should be understood that the terminal device in FIG. 21 and FIG. 22 can perform the steps in the camera control method in the embodiments of this application. To avoid repetition, repeated descriptions are properly omitted in the following descriptions of the terminal device in FIG. 21 and FIG. 22.

FIG. 21 is a schematic block diagram of a terminal device according to an embodiment of this application. The terminal device 400 in FIG. 21 includes an obtaining unit 401 and a control unit 402. A camera is further disposed in the terminal device 400. The obtaining unit 401 and the control unit 402 can perform the steps in the foregoing camera control method in the embodiment of this application in FIG. 1 to FIG. 20.

Specifically, when the terminal device 400 is configured to perform the camera control method, specific functions of the obtaining unit 401 and the control unit 402 are as follows:

The obtaining unit 401 is configured to obtain a first instruction input by a user, where the first instruction is used to play a movement tutorial in a first application in the terminal device.

The control unit 402 is configured to control, in response to the first instruction, the camera to start and pop up from the terminal device and to obtain an image including a user movement after the camera pops up from the terminal device, where the user movement is a movement made by the user by imitating the movement tutorial.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

Optionally, the control unit 402 is further configured to: when playing of the movement tutorial is paused, ended, or quitted, determine to stop obtaining an image including a user movement; and when determining to stop obtaining an image including a user movement, control the camera to close and retract back to the terminal device.

Therefore, in this embodiment of this application, the pop-up camera is controlled to pop up from the terminal device when the terminal device is taking a photo or a video of the user, and the pop-up camera is controlled to hide in the terminal device when the terminal device is not taking a photo or a video of the user. In this way, the user can clearly sense whether the camera is in use at a current moment based on whether the pop-up camera is popped up, thereby protecting privacy of the user and improving user experience.

Optionally, the terminal device 400 further includes a display unit. The display unit may be configured to play the movement tutorial in the first application and an image or a video that includes a user movement and that is obtained by the camera. In this way, the user can directly observe the movement tutorial and the movement made by the user. This helps the user learn, through comparison, whether the movement made by the user is standard, thereby helping improve user experience.

Optionally, the display unit is further configured to prompt the user whether it is necessary to monitor a movement of the user.

The obtaining unit 401 is further configured to obtain a second instruction input by the user, where the second instruction is used to indicate that the user permits the processor to obtain an image including a user movement.

Therefore, in this embodiment of this application, the terminal device can monitor a movement of the user in real time when the user permits the terminal device to obtain an image including a user movement, and does not monitor a movement of the user when the user does not permit the terminal device to obtain a user movement. In this way, the user can autonomously choose whether to start the camera, thereby further protecting privacy of the user and improving user experience.

Optionally, the obtaining unit 401 is further configured to obtain a third instruction input by the user, where the third instruction is used to access the first application. The control unit 402 is further configured to control, in response to the third instruction, the camera to start and pop up from the terminal device and to obtain an image including facial information of the user after the camera pops up from the terminal device. The control unit is further configured to access an account of the user based on the image including the facial information of the user, where the account of the user stores the facial information of the user.

Optionally, the control unit 402 is further configured to create the account of the user based on the image including the facial information of the user.

Optionally, the control unit 402 is further configured to: after the image including the facial information of the user is obtained, control the camera to close and retract back to the terminal device.

Therefore, in this embodiment of this application, the pop-up camera is controlled to pop up from the terminal device when the terminal device is collecting the facial information of the user, and the pop-up camera is controlled to hide in the terminal device when the terminal device is not collecting the facial information of the user. In this way, the user can clearly sense whether the camera is in use at a current moment based on whether the pop-up camera is popped up, thereby protecting privacy of the user and improving user experience.

Optionally, the terminal device further includes an audio player. The control unit 402 is further configured to: in a process of controlling the camera to start and pop up from the terminal device, control the audio player to play first audio, where the first audio is used to indicate that the terminal device is starting the camera.

In this embodiment of this application, the terminal device plays a voice prompt in the process in which the camera pops up from the terminal device. In this way, even in darkness, the user can still sense that the camera is popping up, thereby improving user experience.

Optionally, the control unit 402 is further configured to: in a process of controlling the camera to close and retract back to the terminal device, control the audio player to play second audio, where the second audio is used to indicate that the terminal device is closing the camera.

In this embodiment of this application, the terminal device plays a voice prompt in the process in which the camera retracts back to the terminal device. In this way, even in darkness, the user can still sense that the camera is retracting back, thereby improving user experience.

For example, the obtaining unit 401 may obtain, by using a display of the terminal device, an instruction input by the user. The control unit may be a processor of the terminal device. However, this embodiment of this application is not limited thereto.

FIG. 21 is a schematic diagram of a structure of a terminal device according to an embodiment of this application. As shown in FIG. 21, the terminal device includes a communications module 510, a sensor 520, a user input module 530, an output module 540, a processor 550, an audio/video input module 560, a memory 570, and a power supply 580.

The communications module 510 may include at least one module that can enable the computer system to communicate with a communications system or another computer system. For example, the communications module 510 may include one or more of a wired network interface, a broadcast receiving module, a mobile communications module, a wireless internet module, a local area communications module, and a location (or positioning) information module. The plurality of modules each have a plurality of implementations in the conventional technology, and details are not described in this application.

The sensor 520 can sense a current status of the system, for example, an open/closed state, a location, whether the system is in contact with a user, a direction, and acceleration/deceleration. In addition, the sensor 520 can generate a sensing signal used to control an operation of the system.

The user input module 530 is configured to: receive input digital information or character information or a contact touch operation/contactless gesture, and receive a signal input related to user settings and function control of the system, and the like. The user input module 930 includes a touch panel and/or another input device.

For example, the user input module 530 may be configured to obtain a first instruction input by the user, where the first instruction is used to play a movement tutorial in a first application in the terminal device.

For another example, the user input module 530 may be configured to obtain a second instruction input by the user. The second instruction is used to indicate that the user permits the processor to obtain an image including a user movement.

For another example, the user input module 530 may be configured to obtain a third instruction input by the user. The third instruction is used to access the first application.

The output model 540 includes a display panel, configured to display information entered by the user, information provided for the user, various menu interfaces of the system, and the like. Optionally, the display panel may be configured in a form of a liquid crystal display (liquid crystal display, LCD), an organic light-emitting diode (organic light-emitting diode, OLED), or the like. In some other embodiments, the touch panel may cover the display panel to form a touch display. In addition, the output model 540 may further include an audio output module, an alarm, a tactile module, and the like.

For example, the output module 540 is configured to play, by using a display, the movement tutorial in the first application and the image that includes the user movement and that is obtained by the camera.

For another example, the output module 540 may be configured to prompt (indicate to) the user whether it is necessary to monitor a movement of the user.

The audio/video input module 560 is configured to input an audio signal or a video signal. The audio/video input module 560 may include a camera and a microphone. The camera may be a pop-up camera, configured to obtain a video or an image including a movement of the user.

The power supply 580 may receive external power and internal power under the control of the processor 550, and provide power required by operations of the components in the system.

The processor 550 may indicate one or more processors. For example, the processor 550 may include one or more central processing units, or include a central processing unit and a graphics processing unit, or include an application processor and a coprocessor (for example, a micro control unit). When the processor 550 includes a plurality of processors, the plurality of processors may be integrated into a same chip, or may be independent of each other. One processor may include one or more physical cores. The physical core is a smallest processing module.

For example, the processor 550 is configured to control, in response to the first instruction, the camera to start and pop up from the terminal device and to obtain an image including a user movement after the camera pops up from the terminal device, where the user movement is a movement made by the user by imitating the movement tutorial.

For another example, the processor 530 is further configured to: when playing of the movement tutorial is paused, ended, or quitted, determine to stop obtaining an image including a user movement; and when determining to stop obtaining an image including a user movement, control the camera to close and retract back to the terminal device.

For another example, the processor 530 is further configured to control, in response to the third instruction, the camera to start and pop up from the terminal device and to obtain an image including facial information of the user after the camera pops up from the terminal device. The processor is further configured to access an account of the user based on the image including the facial information of the user, where the account of the user stores the facial information of the user.

For another example, the processor 530 is further configured to create the account of the user based on the image including the facial information of the user.

For another example, the processor 530 is further configured to: after the image including the facial information of the user is obtained, control the camera to close and retract back to the terminal device.

For another example, the processor 530 is further configured to: in a process of controlling the camera to start and pop up from the terminal device, control an audio player to play first audio, where the first audio is used to indicate that the terminal device is starting the camera.

For another example, the processor 530 is further configured to: in a process of controlling the camera to close and retract back to the terminal device, control the audio player to play second audio, where the second audio is used to indicate that the terminal device is closing the camera.

The memory 570 stores a computer program. The computer program includes an operating system program 572, an application 571, and the like. For example, a typical operating system is a system used for a desktop computer or a notebook computer, such as Windows of Microsoft or MacOS of Apple; or is a system used for a mobile terminal, such as a Linux^{®} based Android (Android^{®}) system developed by Google. The method provided in the foregoing embodiments may be implemented by software. This may be considered as a specific implementation of the application 571.

The memory 570 may be one or more of the following types: a flash (flash) memory, a hard disk memory, a micro multimedia card memory, a card memory (for example, an SD or XD memory), a random access memory (random access memory, RAM), a static random access memory (static RAM, SRAM), a read-only memory (read-only memory, ROM), an electrically erasable programmable read-only memory (electrically erasable programmable read-only memory, EEPROM), a programmable read-only memory (programmable ROM, PROM), a magnetic memory, a magnetic disk, or an optical disc. In some other embodiments, the memory 570 may alternatively be a network storage device in the internet. The system may perform an operation such as updating or reading on the memory 570 in the internet.

The processor 550 is configured to: read the computer program in the memory 570, and perform a method defined by the computer program. For example, the processor 550 reads the operating system program 572 to run an operating system in the system and implement various functions of the operating system, or reads one or more applications 571 to run an application on the system.

The memory 570 further stores other data 573 besides the computer program, for example, the image including the user movement, a video of the movement tutorial, and the account of the user in this application.

A connection relationship between the modules in FIG. 21 is only an example. A method provided in any embodiment of this application may be also applied to a terminal device using another connection manner. For example, all the modules are connected through a bus.

Persons of ordinary skill in the art may be aware that, in combination with the examples described in the embodiments disclosed in this specification, units and algorithm steps may be implemented by electronic hardware or a combination of computer software and electronic hardware. Whether these functions are performed by hardware or software depends on particular applications and design constraints of the technical solutions. Persons skilled in the art may use different methods to implement the described functions for each particular application, but it should not be considered that the implementation goes beyond the scope of this application.

Persons skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in another manner. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, in other words, may be located in one location, or may be distributed on a plurality of network units. Some or all of the units may be selected according to actual requirements to achieve the objectives of the solutions in the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A camera control method, wherein a camera is disposed in a terminal device, and the method comprises: obtaining, by the terminal device, a first instruction input by the user, wherein the first instruction is used to play a movement tutorial in a first application in the terminal device;
prompting, by the terminal device, a user whether it is necessary to monitor a movement of the user;
obtaining, by the terminal device, a second instruction input by the user, wherein the second instruction is used to indicate that the user permits the terminal device to obtain an image comprising a user movement, wherein the user movement is a movement made by the user by imitating the movement tutorial;
and
controlling, by the terminal device in response to the first instruction and the second instruction, the camera to start and pop up from the terminal device and to obtain the image comprising the user movement after the camera pops up from the terminal device.

2. The method according to claim 1, further comprising:
when playing of the movement tutorial is paused, ended, or quitted, determining, by the terminal device, to stop obtaining an image comprising a user movement; and
controlling, by the terminal device when determining to stop obtaining an image comprising a user movement, the camera to close and retract back to the terminal device.

3. The method according to claim 1 or 2, wherein the terminal device further comprises a display, and the method further comprises:
playing, by using the display, the movement tutorial and the image that comprises the user movement and that is obtained by the camera.

4. The method according to any one of claims 1 to 3, before the obtaining, by the terminal device, a first instruction input by a user, further comprising:
obtaining, by the terminal device, a third instruction input by the user, wherein the third instruction is used to access the first application;
controlling, by the terminal device in response to the third instruction, the camera to start and pop up from the terminal device and to obtain an image comprising facial information of the user after the camera pops up from the terminal device; and
accessing, by the terminal device, an account of the user based on the image comprising the facial information of the user, wherein the account of the user stores the facial information of the user.

5. The method according to claim 4, before the accessing, by the terminal device, an account of the user based on the image comprising the facial information of the user, further comprising:
creating, by the terminal device, the account of the user based on the image comprising the facial information of the user.

6. The method according to claim 5 or 4, further comprising:
controlling, by the terminal device after the image comprising the facial information of the user is obtained, the camera to close and retract back to the terminal device.

7. The method according to any one of claims 1 to 6, wherein the terminal device further comprises an audio player, and the method further comprises:
in a process in which the terminal device controls the camera to start and pop up from the terminal device, controlling, by the terminal device, the audio player to play first audio, wherein the first audio is used to indicate that the terminal device is starting the camera.

8. The method according to any one of claims 1 to 7, wherein the terminal device further comprises the audio player, and the method further comprises:
in a process in which the terminal device controls the camera to close and retract back to the terminal device, controlling, by the terminal device, the audio player to play second audio, wherein the second audio is used to indicate that the terminal device is closing the camera.

9. A terminal device, wherein a camera is disposed in the terminal device, and the terminal device comprises:
a processor, configured to obtain a first instruction input by a user, wherein the first instruction is used to play a movement tutorial in a first application in the terminal device, wherein
the processor is further configured to:
prompt the user whether it is necessary to monitor a movement of the user;
obtain a second instruction input by the user, wherein the second instruction is used to indicate that the user permits the processor to obtain an image comprising a user movement;
control, in response to the first instruction and the second instruction, the camera to start and pop up from the terminal device; and
obtain the image comprising the user movement after the camera pops up from the terminal device, wherein the user movement is a movement made by the user by imitating the movement tutorial.

10. The terminal device according to claim 9, wherein the processor is further configured to:
when playing of the movement tutorial is paused, ended, or quitted, determine to stop obtaining an image comprising a user movement; and
when determining to stop obtaining an image comprising a user movement, control the camera to close and retract back to the terminal device.

11. The terminal device according to claim 10 or 9, wherein the terminal device further comprises a display, and the processor is further configured to play, by using the display, the movement tutorial and the image that comprises the user movement and that is obtained by the camera.

12. The terminal device according to any one of claims 9 to 11, wherein
the processor is further configured to obtain a third instruction input by the user, wherein the third instruction is used to access the first application;
the processor is further configured to control, in response to the third instruction, the camera to start and pop up from the terminal device and to obtain an image comprising facial information of the user after the camera pops up from the terminal device; and
the processor is further configured to access an account of the user based on the image comprising the facial information of the user, wherein the account of the user stores the facial information of the user.

13. The apparatus according to claim 12, wherein the processor is further configured to:
after the image comprising the facial information of the user is obtained, control the camera to close and retract back to the terminal device.

14. The apparatus according to any one of claims 9 to 13, wherein the terminal device further comprises an audio player, and the processor is further configured to:
in a process of controlling the camera to start and pop up from the terminal device, control the audio player to play first audio, wherein the first audio is used to indicate that the terminal device is starting the camera.

## Patentansprüche

1. Kamerasteuerungsverfahren, wobei eine Kamera in einem Endgerät angeordnet ist und das Verfahren Folgendes umfasst:
Erlangen, durch das Endgerät, einer ersten Anweisung, die durch den Benutzer eingegeben wird, wobei die erste Anweisung dazu verwendet wird, ein Bewegungs-Tutorial in einer ersten Anwendung auf dem Endgerät abzuspielen;
Abfragen, durch das Endgerät, eines Benutzers, ob es notwendig ist, eine Bewegung des Benutzers zu überwachen;
Erlangen, durch das Endgerät, einer zweiten Anweisung, die durch den Benutzer eingegeben wird, wobei die zweite Anweisung dazu verwendet wird, anzugeben, dass der Benutzer es dem Endgerät erlaubt, ein Bild, umfassend eine Benutzerbewegung, zu erlangen, wobei die Benutzerbewegung eine Bewegung ist, die durch den Benutzer durch Nachahmen des Bewegungs-Tutorials ausgeführt wird;
und
Steuern, durch das Endgerät als Reaktion auf die erste Anweisung und die zweite Anweisung, der Kamera, um zu starten und sich aus dem Endgerät zu erheben und um das Bild, umfassend die Benutzerbewegung, zu erlangen, nachdem sich die Kamera aus dem Endgerät erhoben hat.

2. Verfahren nach Anspruch 1, ferner umfassend:
wenn das Abspielen des Bewegungs-Tutorials angehalten, beendet oder abgebrochen wird, Bestimmen, durch das Endgerät, das Erlangen eines Bildes, umfassend eine Benutzerbewegung, zu stoppen; und
Steuern, durch das Endgerät beim Bestimmen, das Erlangen eines Bildes, umfassend eine Benutzerbewegung, zu stoppen, der Kamera, um sich zu schließen und sich in das Endgerät zurückzuziehen.

3. Verfahren nach Anspruch 1 oder 2, wobei das Endgerät ferner eine Anzeige umfasst und das Verfahren ferner Folgendes umfasst: Abspielen, unter Verwendung der Anzeige, des Bewegungs-Tutorials und des Bildes, das die Benutzerbewegung umfasst und das durch die Kamera erlangt wird.

4. Verfahren nach einem der Ansprüche 1 bis 3, vor dem Erlangen, durch das Endgerät, einer ersten Anweisung, die durch einen Benutzer eingegeben wird, ferner umfassend:
Erlangen, durch das Endgerät, einer dritten Anweisung, die durch den Benutzer eingegeben wird, wobei die dritte Anweisung dazu verwendet wird, auf die erste Anwendung zuzugreifen;
Steuern, durch das Endgerät als Reaktion auf die dritte Anweisung, der Kamera, um zu starten und sich aus dem Endgerät zu erheben und um ein Bild, umfassend Antlitzinformationen des Benutzers, zu erlangen, nachdem sich die Kamera aus dem Endgerät erhoben hat; und
Zugreifen, durch das Endgerät, auf ein Konto des Benutzers basierend auf dem Bild, umfassend die Antlitzinformationen des Benutzers, wobei das Konto des Benutzers die Antlitzinformationen des Benutzers speichert.

5. Verfahren nach Anspruch 4, vor dem Zugreifen, durch das Endgerät, auf ein Konto des Benutzers basierend auf dem Bild, umfassend die Antlitzinformationen des Benutzers, ferner umfassend:
Erstellen, durch das Endgerät, des Kontos des Benutzers basierend auf dem Bild, umfassend die Antlitzinformationen des Benutzers.

6. Verfahren nach Anspruch 5 oder 4, ferner umfassend:
Steuern, durch das Endgerät, nachdem das Bild, umfassend die Antlitzinformationen des Benutzers, erlangt wurde, der Kamera, um sich zu schließen und sich in das Endgerät zurückzuziehen.

7. Verfahren nach einem der Ansprüche 1 bis 6, wobei das Endgerät ferner eine Audioabspieleinrichtung umfasst und das Verfahren ferner Folgendes umfasst:
in einem Prozess, in dem das Endgerät die Kamera steuert, um zu starten und sich aus dem Endgerät zu erheben, Steuern, durch das Endgerät, der Audioabspieleinrichtung, um ein erstes Audio abzuspielen, wobei das erste Audio dazu verwendet wird, anzugeben, dass das Endgerät die Kamera startet.

8. Verfahren nach einem der Ansprüche 1 bis 7, wobei das Endgerät ferner die Audioabspieleinrichtung umfasst und das Verfahren ferner Folgendes umfasst:
in einem Prozess, in dem das Endgerät die Kamera steuert, um sich zu schließen und sich in das Endgerät zurückzuziehen, Steuern, durch das Endgerät, der Audioabspieleinrichtung, um ein zweites Audio abzuspielen, wobei das zweite Audio dazu verwendet wird, anzugeben, dass das Endgerät die Kamera schließt.

9. Endgerät, wobei eine Kamera in dem Endgerät angeordnet ist und das Endgerät Folgendes umfasst:
einen Prozessor, der dazu konfiguriert ist, eine erste Anweisung zu erlangen, die durch einen Benutzer eingegeben wird, wobei die erste Anweisung dazu verwendet wird, ein Bewegungs-Tutorial in einer ersten Anwendung in dem Endgerät abzuspielen, wobei
der Prozessor ferner zu Folgendem konfiguriert ist:
Abfragen des Benutzers, ob es notwendig ist, eine Bewegung des Benutzers zu überwachen;
Erlangen einer zweiten Anweisung, die durch den Benutzer eingegeben wird, wobei die zweite Anweisung dazu verwendet wird, anzugeben, dass der Benutzer es dem Prozessor erlaubt, ein Bild, umfassend eine Benutzerbewegung, zu erlangen;
Steuern, als Reaktion auf die erste Anweisung und die zweite Anweisung, der Kamera, um zu starten und sich aus dem Endgerät zu erheben; und
Erlangen des Bildes, umfassend die Benutzerbewegung, nachdem sich die Kamera aus dem Endgerät erhoben hat, wobei die Benutzerbewegung eine Bewegung ist, die durch den Benutzer durch Nachahmen des Bewegungs-Tutorials ausgeführt wird.

10. Endgerät nach Anspruch 9, wobei der Prozessor ferner zu Folgendem konfiguriert ist:
wenn das Abspielen des Bewegungs-Tutorials angehalten, beendet oder abgebrochen wird, Bestimmen, das Erlangen eines Bildes, umfassend eine Benutzerbewegung, zu stoppen; und
beim Bestimmen, das Erlangen eines Bildes, umfassend eine Benutzerbewegung, zu stoppen, Steuern der Kamera, um sich zu schließen und sich in das Endgerät zurückzuziehen.

11. Endgerät nach Anspruch 10 oder 9, wobei das Endgerät ferner eine Anzeige umfasst und der Prozessor ferner dazu konfiguriert ist, unter Verwendung der Anzeige das Bewegungs-Tutorial und das Bild, das die Benutzerbewegung umfasst und das durch die Kamera erlangt wird, abzuspielen.

12. Endgerät nach einem der Ansprüche 9 bis 11, wobei
der Prozessor ferner dazu konfiguriert ist, eine dritte Anweisung, die durch den Benutzer eingegeben wird, zu erlangen, wobei die dritte Anweisung dazu verwendet wird, auf die erste Anwendung zuzugreifen;
der Prozessor ferner dazu konfiguriert ist, als Reaktion auf die dritte Anweisung, die Kamera zu steuern, um zu starten und sich aus dem Endgerät zu erheben und um ein Bild, umfassend Antlitzinformationen des Benutzers, zu erlangen, nachdem sich die Kamera aus dem Endgerät erhoben hat; und
der Prozessor ferner dazu konfiguriert ist, basierend auf dem Bild, umfassend die Antlitzinformationen des Benutzers, auf ein Konto des Benutzers zuzugreifen, wobei das Konto des Benutzers die Antlitzinformationen des Benutzers speichert.

13. Vorrichtung nach Anspruch 12, wobei der Prozessor ferner zu Folgendem konfiguriert ist:
nachdem das Bild, umfassend die Antlitzinformationen des Benutzers, erlangt wurde, Steuern der Kamera, um sich zu schließen und sich in das Endgerät zurückzuziehen.

14. Vorrichtung nach einem der Ansprüche 9 bis 13, wobei das Endgerät ferner eine Audioabspieleinrichtung umfasst und der Prozessor ferner zu Folgendem konfiguriert ist:
in einem Prozess des Steuerns der Kamera, um zu starten und sich aus dem Endgerät zu erheben, Steuern der Audioabspieleinrichtung, um ein erstes Audio abzuspielen, wobei das erste Audio dazu verwendet wird, anzugeben, dass das Endgerät die Kamera startet.

## Revendications

1. Procédé de commande de caméra, dans lequel une caméra est disposée dans un dispositif terminal, et le procédé comprend :
l'obtention, par le dispositif terminal, d'une première instruction entrée par l'utilisateur, dans lequel la première instruction est utilisée pour lire un didacticiel de mouvement dans une première application dans le dispositif terminal ;
l'invitation, par le dispositif terminal, de l'utilisateur à indiquer s'il est nécessaire de surveiller un mouvement de l'utilisateur ;
l'obtention, par le dispositif terminal, d'une deuxième instruction entrée par l'utilisateur, dans lequel la deuxième instruction est utilisée pour indiquer que l'utilisateur autorise le dispositif terminal à obtenir une image comprenant un mouvement de l'utilisateur, dans lequel le mouvement de l'utilisateur est un mouvement effectué par l'utilisateur en imitant le didacticiel de mouvement ;
et
la commande, par le dispositif terminal en réponse à la première instruction et à la deuxième instruction, du démarrage de la caméra et de son déploiement à partir du dispositif terminal et
de l'obtention de l'image comprenant le mouvement de l'utilisateur après l'affichage de la caméra à partir du dispositif terminal.

2. Procédé selon la revendication 1, comprenant également :
lorsque la lecture du didacticiel de mouvement est interrompue, terminée ou abandonnée, la détermination, par le dispositif terminal, de la question de savoir s'il faut arrêter l'obtention d'une image comprenant un mouvement de l'utilisateur ; et
la commande, par le dispositif terminal lorsqu'il a déterminé qu'il fallait arrêter l'obtention d'une image comprenant un mouvement d'utilisateur, de la fermeture de la caméra et de sa rétraction vers le dispositif terminal.

3. Procédé selon la revendication 1 ou 2, dans lequel le dispositif terminal comprend également un écran, et le procédé comprend également :
la lecture, à l'aide de l'écran, du tutoriel de mouvement et de l'image comprenant le mouvement de l'utilisateur et obtenue par la caméra.

4. Procédé selon l'une quelconque des revendications 1 à 3, comprenant également, avant l'obtention, par le dispositif terminal, d'une première instruction entrée par un utilisateur :
l'obtention, par le dispositif terminal, d'une troisième instruction entrée par l'utilisateur, dans lequel la troisième instruction est utilisée pour accéder à la première application ;
la commande, par le dispositif terminal en réponse à la troisième instruction, du démarrage de la caméra et de son déploiement à partir du dispositif terminal et de l'obtention d'une image comprenant des informations faciales de l'utilisateur après le déploiement de la caméra à partir du dispositif terminal ; et
l'accès, par le dispositif terminal, à un compte de l'utilisateur sur la base de l'image comprenant les informations faciales de l'utilisateur, dans lequel le compte de l'utilisateur enregistre les informations faciales de l'utilisateur.

5. Procédé selon la revendication 4, comprenant également, avant l'accès, par le dispositif terminal, à un compte de l'utilisateur sur la base de l'image comprenant les informations faciales de l'utilisateur :
la création, par le dispositif terminal, du compte de l'utilisateur sur la base de l'image comprenant les informations faciales de l'utilisateur.

6. Procédé selon la revendication 5 ou 4, comprenant également : la commande, par le dispositif terminal après l'obtention de l'image comprenant les informations faciales de l'utilisateur, de la fermeture de la caméra et sa rétractation vers le dispositif terminal.

7. Procédé selon l'une quelconque des revendications 1 à 6, dans lequel le dispositif terminal comprend également un lecteur audio, et le procédé comprend également :
dans un processus dans lequel le dispositif terminal commande le démarrage de la caméra et son déploiement à partir du dispositif terminal, la commande, par le dispositif terminal, de la lecture d'un premier audio par le lecteur audio, dans lequel le premier audio est utilisé pour indiquer que le dispositif terminal démarre la caméra.

8. Procédé selon l'une quelconque des revendications 1 à 7, dans lequel le dispositif terminal comprend également le lecteur audio, et le procédé comprend également :
dans un processus dans lequel le dispositif terminal commande la fermeture de la caméra et sa rétraction vers le dispositif terminal, la commande, par le dispositif terminal, de la lecture d'un second audio par le lecteur audio, dans lequel le second audio est utilisé pour indiquer que le dispositif terminal ferme la caméra.

9. Dispositif terminal, dans lequel une caméra est disposée dans le dispositif terminal, et le dispositif terminal comprend :
un processeur, configuré pour obtenir une première instruction entrée par un utilisateur, dans lequel la première instruction est utilisée pour lire un didacticiel de mouvement dans une première application dans le dispositif terminal, dans lequel
le processeur est également configuré pour :
inviter l'utilisateur à indiquer s'il est nécessaire de surveiller un mouvement de l'utilisateur ;
obtenir une deuxième instruction entrée par l'utilisateur, dans lequel la deuxième instruction est utilisée pour indiquer que l'utilisateur autorise le processeur à obtenir une image comprenant un mouvement de l'utilisateur ;
commander, en réponse à la première instruction et à la deuxième instruction, le démarrage de la caméra et son déploiement à partir du dispositif terminal ; et
obtenir l'image comprenant le mouvement de l'utilisateur après le déploiement de la caméra à partir du dispositif terminal, dans lequel le mouvement de l'utilisateur est un mouvement effectué par l'utilisateur en imitant le didacticiel de mouvement.

10. Dispositif terminal selon la revendication 9, dans lequel le processeur est également configuré pour :
lorsque la lecture du didacticiel de mouvement est interrompue, terminée ou abandonnée, déterminer s'il faut arrêter l'obtention d'une image comprenant un mouvement de l'utilisateur ; et
lorsqu'il a été déterminé qu'il fallait arrêter l'obtention d'une image comprenant un mouvement d'utilisateur, commander la fermeture de la caméra et sa rétraction vers le dispositif terminal.

11. Dispositif terminal selon la revendication 10 ou 9, dans lequel le dispositif terminal comprend également un écran, et le processeur est également configuré pour lire, à l'aide de l'écran, le didacticiel de mouvement et l'image qui comprend le mouvement de l'utilisateur et qui est obtenue par la caméra.

12. Dispositif terminal selon l'une quelconque des revendications 9 à 11, dans lequel
le processeur est également configuré pour obtenir une troisième instruction entrée par l'utilisateur, dans lequel la troisième instruction est utilisée pour accéder à la première application ;
le processeur est également configuré pour commander, en réponse à la troisième instruction, le démarrage de la caméra et son déploiement à partir du dispositif terminal et l'obtention d'une image comprenant des informations faciales de l'utilisateur après le déploiement de la caméra à partir du dispositif terminal ; et
le processeur est également configuré pour accéder à un compte de l'utilisateur sur la base de l'image comprenant les informations faciales de l'utilisateur, dans lequel le compte de l'utilisateur enregistre les informations faciales de l'utilisateur.

13. Appareil selon la revendication 12, dans lequel le processeur est également configuré pour :
commander, après l'obtention de l'image comprenant les informations faciales de l'utilisateur, la fermeture de la caméra et sa rétractation vers le dispositif terminal.

14. Appareil selon l'une quelconque des revendications 9 à 13, dans lequel le dispositif terminal comprend également un lecteur audio, et le processeur est également configuré pour :
dans un processus de commande du démarrage de la caméra et de son déploiement à partir du dispositif terminal, commander la lecture d'un premier audio par le lecteur audio, dans lequel le premier audio est utilisé pour indiquer que le dispositif terminal démarre la caméra.
